# EUROPEAN PATENT APPLICATION

(11) **EP 4 804 445 A1**
(43) Date of publication of application: **09.09.2026**
(21) Application number: 23957364.5
(22) Date of filing: 03.11.2023
(51) Int. Cl.: H04L 5/00

(54) **PORT NUMBER DETERMINATION METHOD AND APPARATUS, AND STORAGE MEDIUM**

(71) Applicant: Beijing Xiaomi Mobile Software Co., Ltd., Beijing 100085 (CN)
(72) Inventor: WU, Shijuan, Beijing 100085 (CN)
(74) Representative: Stöckeler, Ferdinand
(86) International application number: PCT/CN2023/129782
(87) International publication number: WO 2025/091508

(57) **Abstract**

The present disclosure provides a port number determination method and apparatus, and a storage medium. The method comprises: determining the number of antenna ports, the number of antenna ports being the number of antenna ports corresponding to a channel state information-reference signal (CSI-RS) resource in a channel state information (CSI) report configuration, wherein the CSI report configuration comprises a plurality of sub-configurations, and the CSI-RS resource is associated with M sub-configurations among X sub-configurations comprised in the CSI report configuration, wherein X and M are positive integers, and M is less than or equal to X. The present disclosure can prevent the number of antenna ports scheduled by a network device from exceeding terminal capabilities, improving the availability and reliability of controlling network energy consumption overhead.

## Description

### FIELD

The present disclosure relates to the field of communications, and in particular, to a method for determining a port quantity, a device and a storage medium.

### BACKGROUND

In Release-18 (R-18), a network device can dynamically reduce the number of spatial elements or transmission power for transmitting downlink data based on dynamic changes in transmission load, so as to reduce network energy consumption overhead.

### SUMMARY

In order to improve the usability for controlling network energy consumption overhead, embodiments of the present disclosure provide a method for determining a port quantity, a device and a storage medium.

According to a first aspect of the embodiments of the present disclosure, a method for determining a port quantity is provided, including:
determining the quantity of antenna ports, where the quantity of antenna ports is the quantity of antenna ports corresponding to a channel state information reference signal (CSI-RS) resource in a channel state information (CSI) report configuration, the CSI report configuration includes a plurality of sub-configurations, and the CSI-RS resource is associated with M sub-configurations among X sub-configurations included in the CSI report configuration; where X and M are positive integers, and M is less than or equal to X.

According to a second aspect of the embodiments of the present disclosure, a method for determining a port quantity is provided, including:
determining the quantity of antenna ports, where the quantity of antenna ports is the quantity of antenna ports corresponding to a channel state information reference signal (CSI-RS) resource in a channel state information (CSI) report configuration; where the CSI report configuration includes a plurality of sub-configurations, and the CSI-RS resource is associated with M sub-configurations among X sub-configurations included in the CSI report configuration; where X and M are positive integers, and M is less than or equal to X.

According to a third aspect of the embodiments of the present disclosure, there is provided a terminal, including:
a processing module configured to determine the quantity of antenna ports, where the quantity of antenna ports is the quantity of antenna ports corresponding to a channel state information reference signal (CSI-RS) resource in a channel state information (CSI) report configuration; where the CSI report configuration includes a plurality of sub-configurations, and the CSI-RS resource is associated with M sub-configurations among X sub-configurations included in the CSI report configuration; where X and M are positive integers, and M is less than or equal to X.

According to a fourth aspect of the embodiments of the present disclosure, there is provided a network device, including:
a processing module configured to determine the quantity of antenna ports, where the quantity of antenna ports is the quantity of antenna ports corresponding to a channel state information reference signal (CSI-RS) resource in a channel state information (CSI) report configuration; where the CSI report configuration includes a plurality of sub-configurations, and the CSI-RS resource is associated with M sub-configurations among X sub-configurations included in the CSI report configuration; where X and M are positive integers, and M is less than or equal to X.

According to a fifth aspect of the embodiments of the present disclosure, there is provided a terminal, including:
one or more processors;
where the terminal is configured to perform the method for determining a port quantity according to any one of the first aspect.

According to a sixth aspect of the embodiments of the present disclosure, there is provided a network device, including:
one or more processors;
where the network device is configured to perform the port quantity determination behavior method according to any one of the second aspect.

According to a seventh aspect of the embodiments of the present disclosure, a communication system is provided, including a terminal and a network device, where the terminal is configured to implement the method for determining a port quantity according to any one of the first aspect, and the network device is configured to implement the method for determining a port quantity according to any one of the second aspect.

According to an eighth aspect of the embodiments of the present disclosure, a storage medium is provided, where the storage medium stores instructions, and when the instructions are executed on a communication device, the communication device is caused to perform the method for determining a port quantity according to any one of the first aspect or the second aspect.

In the embodiments of the present disclosure, both the terminal and the network device can determine the quantity of antenna ports, where the quantity of antenna ports is the quantity of antenna ports corresponding to a CSI-RS resource in a CSI report configuration. The CSI report configuration includes a plurality of sub-configurations, and the CSI-RS resource is associated with M sub-configurations among X sub-configurations included in the CSI report configuration. X and M are positive integers, and M is less than or equal to X. It is avoided that the quantity of antenna ports scheduled by the network device exceeds the capability of the terminal, and the usability and reliability for controlling network energy consumption overhead are improved.

It should be understood that the above general description and the following detailed description are only exemplary and explanatory, and do not limit the present disclosure.

### BRIEF DESCRIPTION OF THE DRAWINGS

The drawings, which are incorporated in and constitute a part of this specification, illustrate embodiments consistent with the invention and together with the description serve to explain the principles of the invention.
FIG. 1A is an exemplary schematic diagram of an architecture of a communication system according to an embodiment of the present disclosure.
FIG. 1B is a schematic diagram of a scenario of type 1 SD according to an embodiment of the present disclosure.
FIG. 1C is a schematic diagram of a scenario of type 2 SD according to an embodiment of the present disclosure.
FIG. 2A is an exemplary interaction schematic diagram of a method for determining a port quantity according to an embodiment of the present disclosure.
FIG. 2B is a schematic diagram of a scenario of determining a port quantity according to an embodiment of the present disclosure.
FIG. 2C is a schematic diagram of a scenario of determining a port quantity according to an embodiment of the present disclosure.
FIG. 2D is a schematic diagram of a scenario of determining a port quantity according to an embodiment of the present disclosure.
FIG. 3A is an exemplary flowchart of a method for determining a port quantity according to an embodiment of the present disclosure.
FIG. 3B is an exemplary flowchart of a method for determining a port quantity according to an embodiment of the present disclosure.
FIG. 4A is an exemplary structural diagram of a terminal according to an embodiment of the present disclosure.
FIG. 4B is an exemplary structural diagram of a network device according to an embodiment of the present disclosure.
FIG. 5A is an exemplary structural diagram of a communication device according to an embodiment of the present disclosure.
FIG. 5B is an exemplary structural diagram of a chip according to an embodiment of the present disclosure.

### DETAILED DESCRIPTION

Exemplary embodiments will be described in detail herein, examples of which are illustrated in the accompanying drawings. When the following description refers to the accompanying drawings, the same numbers in different drawings refer to the same or similar elements unless otherwise indicated. The implementations described in the following exemplary embodiments do not represent all implementations consistent with the present disclosure. Rather, they are merely examples of apparatuses and methods consistent with some aspects of the present disclosure as recited in the appended claims.

Embodiments of the present disclosure provide a method for determining a port quantity, a device and a storage medium.

In a first aspect, embodiments of the present disclosure provide a method for determining a port quantity, including:
determining the quantity of antenna ports, where the quantity of antenna ports is the quantity of antenna ports corresponding to a channel state information reference signal (CSI-RS) resource in a channel state information (CSI) report configuration; where the CSI report configuration includes a plurality of sub-configurations, and the CSI-RS resource is associated with M sub-configurations among X sub-configurations included in the CSI report configuration; where X and M are positive integers, and M is less than or equal to X.

In the above embodiment, the terminal can determine the quantity of antenna ports based on a CSI report configuration including a plurality of sub-configurations, where the quantity of antenna ports is the quantity of antenna ports corresponding to a channel state information reference signal (CSI-RS) resource in a channel state information (CSI) report configuration. It ensures that the terminal and the network device have a consistent understanding of the quantity of antenna ports, and the usability is high.

In combination with the first aspect, in some embodiments, the CSI report configuration corresponds to a joint adaptation between a spatial domain (SD) and a power domain (PD).

In the above embodiment, the network device can configure the CSI report configuration to correspond to the joint adaptation between SD and PD.

In combination with the first aspect, in some embodiments, determining the quantity of antenna ports includes:
determining that the quantity of antenna ports is equal to a first value; where the CSI report configuration corresponds to a joint adaptation between a first type of SD and the PD, where a CSI-RS resource corresponding to the first type of SD corresponds to a plurality of SD patterns.

In the above embodiment, when the CSI report configuration corresponds to the joint adaptation between the first type of SD and the PD, the terminal can determine that the quantity of antenna ports is equal to the first value, ensuring that the terminal and the network device have a consistent understanding of the quantity of antenna ports during SD and PD joint adaptation, and the usability is high.

In combination with the first aspect, in some embodiments, the first value is one of:
a maximum between a value P and a sum of M values Ps, where the value Ps is the quantity of antenna ports corresponding to a sub-configuration s among the M sub-configurations, and the value P is a default quantity of antenna ports corresponding to the CSI-RS resource;
a sum of M values Ps, where the value Ps is the quantity of antenna ports corresponding to a sub-configuration s among the M sub-configurations;
a sum of L values Ps, where the value Ps is the quantity of antenna ports corresponding to a sub-configuration s among the M sub-configurations, and L is a total quantity of sub-configurations configured in the CSI report configuration.

In the above embodiment, the first value can be equal to any of the above values, specifying the quantity of antenna ports during SD and PD joint adaptation, and the usability is high.

In combination with the first aspect, in some embodiments, the first value is one of:
$max \left({\sum }_{s = 1}^{M} {P}_{s} , P\right)$, where the value Ps is the quantity of antenna ports corresponding to a sub-configuration s among the M sub-configurations, and the value P is a default quantity of antenna ports corresponding to the CSI-RS resource;
${\sum }_{s = 1}^{M} {P}_{s}$, where the value Ps is the quantity of antenna ports corresponding to a sub-configuration s among the M sub-configurations;
${\sum }_{s = 1}^{L} {P}_{s}$, where Ps is the quantity of antenna ports corresponding to a sub-configuration s among L sub-configurations, and L is a total quantity of sub-configurations configured in the CSI report configuration.

In the above embodiment, the first value can be calculated using any of the above formulas, specifying the quantity of antenna ports during SD and PD joint adaptation, and the usability is high.

In combination with the first aspect, in some embodiments, determining the quantity of antenna ports includes:
determining that the quantity of antenna ports is equal to a product of M and a value P; where the CSI report configuration corresponds to a joint adaptation between a first type of SD and the PD, where a CSI-RS resource corresponding to the first type of SD corresponds to a plurality of SD patterns, and the value P is a default quantity of antenna ports corresponding to the CSI-RS resource.

In the above embodiment, when the CSI report configuration corresponds to the joint adaptation between the first type of SD and the PD, the terminal can determine that the quantity of antenna ports is equal to the product of M and P, ensuring that the terminal and the network device have a consistent understanding of the quantity of antenna ports during SD and PD joint adaptation, and the usability is high.

In combination with the first aspect, in some embodiments, the method further includes at least one of:
determining that the quantity of antenna ports corresponding to the M sub-configurations is equal to P; where the CSI-RS resource corresponds to a joint adaptation between a first type of SD and the PD, where a CSI-RS resource corresponding to the first type of SD corresponds to a plurality of SD patterns, and the value P is a default quantity of antenna ports corresponding to the CSI-RS resource;
in a case where a value Ps is less than a value P, not expecting that the CSI-RS resource is configured with a PD pattern in a first type of SD pattern; where a CSI-RS resource corresponding to the first type of SD corresponds to a plurality of SD patterns, the value Ps is the quantity of antenna ports corresponding to a sub-configuration s among the M sub-configurations, and the value P is a default quantity of antenna ports corresponding to the CSI-RS resource;
in a case where a value Pc is less than a value P, not expecting that the CSI-RS resource is configured with a plurality of PD patterns under an SD pattern corresponding to the value Pc; where the value Pc is the quantity of antenna ports corresponding to a pattern c among different SD patterns, and the value P is a default quantity of antenna ports corresponding to the CSI-RS resource.

In the above embodiment, it ensures that the terminal and the network device have a consistent understanding of the quantity of antenna ports during SD and PD joint adaptation, and the usability is high.

In combination with the first aspect, in some embodiments, the method further includes:
not expecting that the CSI report configuration corresponds to a joint adaptation between a first type of SD and the PD; where a CSI-RS resource corresponding to the first type of SD corresponds to a plurality of SD patterns.

In the above embodiment, the network device may not configure the CSI report configuration to correspond to the joint adaptation between the first type of SD and the PD, thereby reducing the computational load and reducing the processing complexity of the terminal.

In combination with the first aspect, in some embodiments, determining the quantity of antenna ports includes:
determining that the quantity of antenna ports is equal to a product of M and a value P; where the CSI report configuration corresponds to a joint adaptation between a second type of SD and the PD, where a CSI-RS resource corresponding to the second type of SD corresponds to one SD pattern, and the value P is a default quantity of antenna ports corresponding to the CSI-RS resource.

In the above embodiment, when the CSI report configuration corresponds to the joint adaptation between the second type of SD and the PD, the terminal can determine that the quantity of antenna ports is equal to the product of M and P, ensuring that the terminal and the network device have a consistent understanding of the quantity of antenna ports during SD and PD joint adaptation, and the usability is high.

In combination with the first aspect, in some embodiments, the method further includes at least one of:
determining X based on a type of the CSI-RS resource;
determining X based on a type of a CSI report.

In the above embodiment, the terminal can determine the value of X based on the type of the CSI-RS resource and/or the type of the CSI report, so as to subsequently determine the quantity of antenna ports, which is simple to implement and has high usability.

In combination with the first aspect, in some embodiments, determining X based on the type of the CSI-RS resource includes any one of:
when the CSI-RS resource is a periodic (P) resource, determining that X is equal to a total quantity of sub-configurations configured in the CSI report configuration;
when the CSI-RS resource is a semi-persistent (SP) resource, determining that X is equal to a total quantity of sub-configurations configured in the CSI report configuration, or determining that X is equal to the quantity of sub-configurations in an active state corresponding to the CSI report configuration;
when the CSI-RS resource is an aperiodic (AP) resource, determining that X is equal to the quantity of sub-configurations in an active state corresponding to the CSI report configuration.

In the above embodiment, based on the type of the CSI-RS resource, X can be determined to be equal to the total quantity of sub-configurations configured in the CSI report configuration, or equal to the quantity of sub-configurations in an active state corresponding to the CSI report configuration, and the usability is high.

In combination with the first aspect, in some embodiments, determining X based on the type of the CSI report includes any one of:
when the CSI report is a P CSI report, determining that X is equal to a total quantity of sub-configurations configured in the CSI report configuration;
when the CSI report is an SP CSI report, determining that X is equal to a total quantity of sub-configurations configured in the CSI report configuration, or determining that X is equal to the quantity of sub-configurations in an active state corresponding to the CSI report configuration;
when the CSI report is an AP CSI report, determining that X is equal to the quantity of sub-configurations in an active state corresponding to the CSI report configuration.

In the above embodiment, based on the type of the CSI report, X can be determined to be equal to the total quantity of sub-configurations configured in the CSI report configuration, or equal to the quantity of sub-configurations in an active state corresponding to the CSI report configuration, and the usability is high.

In combination with the first aspect, in some embodiments, X is associated with sub-configurations configured or activated in the CSI report configuration.

In the above embodiment, the value of X can be associated with sub-configurations configured or activated in the CSI report configuration. The implementation is simple and the usability is high.

In a second aspect, embodiments of the present disclosure provide a method for determining a port quantity, including:
determining the quantity of antenna ports, where the quantity of antenna ports is the quantity of antenna ports corresponding to a channel state information reference signal (CSI-RS) resource in a channel state information (CSI) report configuration; where the CSI report configuration includes a plurality of sub-configurations, and the CSI-RS resource is associated with M sub-configurations among X sub-configurations included in the CSI report configuration; where X and M are positive integers, and M is less than or equal to X.

In the above embodiment, the terminal can determine the quantity of antenna ports based on a CSI report configuration including a plurality of sub-configurations, where the quantity of antenna ports is the quantity of antenna ports corresponding to a channel state information reference signal (CSI-RS) resource in a channel state information (CSI) report configuration. It ensures that the terminal and the network device have a consistent understanding of the quantity of antenna ports, and can avoid that the scheduled quantity of antenna ports exceeds the capability of the terminal, improving the usability and reliability for controlling network energy consumption overhead.

In combination with the second aspect, in some embodiments, the CSI report configuration corresponds to a joint adaptation between a spatial domain (SD) and a power domain (PD).

In combination with the second aspect, in some embodiments, determining the quantity of antenna ports includes:
determining that the quantity of antenna ports is equal to a first value; where the CSI report configuration corresponds to a joint adaptation between a first type of SD and the PD, where a CSI-RS resource corresponding to the first type of SD corresponds to a plurality of SD patterns.

In combination with the second aspect, in some embodiments, the first value is one of:
a maximum between a value P and a sum of M values Ps, where the value Ps is the quantity of antenna ports corresponding to a sub-configuration s among the M sub-configurations, and the value P is a default quantity of antenna ports corresponding to the CSI-RS resource;
a sum of M values Ps, where the value Ps is the quantity of antenna ports corresponding to a sub-configuration s among the M sub-configurations;
a sum of L values Ps, where the value Ps is the quantity of antenna ports corresponding to a sub-configuration s among the M sub-configurations, and L is a total quantity of sub-configurations configured in the CSI report configuration.

In combination with the second aspect, in some embodiments, the first value is one of:
$max \left({\sum }_{s = 1}^{M} {P}_{s} , P\right)$, where the value Ps is the quantity of antenna ports corresponding to a sub-configuration s among the M sub-configurations, and the value P is a default quantity of antenna ports corresponding to the CSI-RS resource;
${\sum }_{s = 1}^{M} {P}_{s}$, where the value Ps is the quantity of antenna ports corresponding to a sub-configuration s among the M sub-configurations;
${\sum }_{s = 1}^{L} {P}_{s}$, where Ps is the quantity of antenna ports corresponding to a sub-configuration s among L sub-configurations, and L is a total quantity of sub-configurations configured in the CSI report configuration.

In combination with the second aspect, in some embodiments, determining the quantity of antenna ports includes:
determining that the quantity of antenna ports is equal to a product of M and a value P; where the CSI report configuration corresponds to a joint adaptation between a first type of SD and the PD, where a CSI-RS resource corresponding to the first type of SD corresponds to a plurality of SD patterns, and the value P is a default quantity of antenna ports corresponding to the CSI-RS resource.

In combination with the second aspect, in some embodiments, the method further includes at least one of:
configuring the quantity of antenna ports corresponding to the M sub-configurations to be equal to a value P; where the CSI report configuration corresponds to a joint adaptation between a first type of SD and the PD, where a CSI-RS resource corresponding to the first type of SD corresponds to a plurality of SD patterns;
in a case where a value Ps is less than a value P, determining that the CSI-RS resource is not configured with a corresponding PD pattern in a first type of SD pattern; where a CSI-RS resource corresponding to the first type of SD corresponds to a plurality of SD patterns, the value Ps is the quantity of antenna ports corresponding to a sub-configuration s among the M sub-configurations, and the value P is a default quantity of antenna ports corresponding to the CSI-RS resource;
in a case where a value Pc is less than a value P, determining that the CSI-RS resource is not configured with a plurality of PD patterns under an SD pattern corresponding to the value Pc; where the value Pc is the quantity of antenna ports corresponding to a pattern c among different SD patterns, and the value P is a default quantity of antenna ports corresponding to the CSI-RS resource.

In combination with the second aspect, in some embodiments, the method further includes:
determining not to configure the CSI report configuration to correspond to a joint adaptation between a first type of SD and the PD; where a CSI-RS resource corresponding to the first type of SD corresponds to a plurality of SD patterns.

In combination with the second aspect, in some embodiments, determining the quantity of antenna ports includes:
determining that the quantity of antenna ports is equal to a product of M and a value P; where the CSI report configuration corresponds to a joint adaptation between a second type of SD and the PD, where a CSI-RS resource corresponding to the second type of SD corresponds to one SD pattern, and the value P is a default quantity of antenna ports corresponding to the CSI-RS resource.

In combination with the second aspect, in some embodiments, the method further includes at least one of:
determining X based on a type of the CSI-RS resource;
determining X based on a type of a CSI report.

In combination with the second aspect, in some embodiments, determining X based on the type of the CSI-RS resource includes any one of:
when the CSI-RS resource is a periodic (P) resource, determining that X is equal to a total quantity of sub-configurations configured in the CSI report configuration;
when the CSI-RS resource is a semi-persistent (SP) resource, determining that X is equal to a total quantity of sub-configurations configured in the CSI report configuration, or determining that X is equal to the quantity of sub-configurations in an active state corresponding to the CSI report configuration;
when the CSI-RS resource is an aperiodic (AP) resource, determining that X is equal to the quantity of sub-configurations in an active state corresponding to the CSI report configuration.

In combination with the second aspect, in some embodiments, determining X based on the type of the CSI report includes any one of:
when the CSI report is a P CSI report, determining that X is equal to a total quantity of sub-configurations configured in the CSI report configuration;
when the CSI report is an SP CSI report, determining that X is equal to a total quantity of sub-configurations configured in the CSI report configuration, or determining that X is equal to the quantity of sub-configurations in an active state corresponding to the CSI report configuration;
when the CSI report is an AP CSI report, determining that X is equal to the quantity of sub-configurations in an active state corresponding to the CSI report configuration.

In combination with the second aspect, in some embodiments, X is associated with sub-configurations configured or activated in the CSI report configuration.

In a third aspect, embodiments of the present disclosure provide a terminal, including:
a processing module configured to determine the quantity of antenna ports, where the quantity of antenna ports is the quantity of antenna ports corresponding to a channel state information reference signal (CSI-RS) resource in a channel state information (CSI) report configuration; where the CSI report configuration includes a plurality of sub-configurations, and the CSI-RS resource is associated with M sub-configurations among X sub-configurations included in the CSI report configuration; where X and M are positive integers, and M is less than or equal to X.

In a fourth aspect, embodiments of the present disclosure provide a network device, including:
a processing module configured to determine the quantity of antenna ports, where the quantity of antenna ports is the quantity of antenna ports corresponding to a channel state information reference signal (CSI-RS) resource in a channel state information (CSI) report configuration; where the CSI report configuration includes a plurality of sub-configurations, and the CSI-RS resource is associated with M sub-configurations among X sub-configurations included in the CSI report configuration; where X and M are positive integers, and M is less than or equal to X.

In a fifth aspect, embodiments of the present disclosure provide a terminal, including:
one or more processors;
where the terminal is configured to perform the method for determining a port quantity according to any one of the first aspect.

In a sixth aspect, embodiments of the present disclosure provide a network device, including:
one or more processors;
where the network device is configured to perform the port quantity determination behavior method according to any one of the second aspect.

In a seventh aspect, embodiments of the present disclosure provide a communication system, including a terminal and a network device, where the terminal is configured to implement the method for determining a port quantity according to any one of the first aspect, and the network device is configured to implement the method for determining a port quantity according to any one of the second aspect.

In an eighth aspect, embodiments of the present disclosure provide a storage medium, where the storage medium stores instructions, and when the instructions are executed on a communication device, the communication device is caused to perform the method for determining a port quantity according to any one of the first aspect or the second aspect.

It can be understood that the above terminal, network device, communication system, storage medium, and computer program are all used to perform the methods proposed in the embodiments of the present disclosure. Therefore, the beneficial effects achievable thereby can refer to the beneficial effects in the corresponding methods, which will not be repeated here.

Embodiments of the present disclosure propose a method for determining a port quantity, a device, and a storage medium. In some embodiments, terms such as method for determining a port quantity, information processing method, and communication method can be interchanged, and terms such as port quantity determination apparatus, information processing apparatus, and communication apparatus can be interchanged, and terms such as information processing system and communication system can be interchanged.

The embodiments of the present disclosure are not exhaustive, but are only illustrative of some embodiments, and do not serve as a specific limitation on the protection scope of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, optional implementations in a certain embodiment can be arbitrarily combined. Furthermore, embodiments can be arbitrarily combined with each other. For example, some or all steps of different embodiments can be arbitrarily combined, and a certain embodiment can be arbitrarily combined with optional implementations of other embodiments.

In the various embodiments of the present disclosure, unless otherwise specified and there is a logical conflict, terms and/or descriptions among the various embodiments are consistent and can be cross-referenced, and technical features in different embodiments can be combined according to their inherent logical relationships to form new embodiments.

The terms used in the embodiments of the present disclosure are only for the purpose of describing specific embodiments, and are not intended to limit the present disclosure.

In the embodiments of the present disclosure, unless otherwise stated, elements expressed in the singular form, such as "a", "an", "the", "said", "above", "aforementioned", "this", etc., may mean "one and only one" or "one or more", "at least one", etc. For example, in the case where articles such as "a", "an", and "the" in English are used in translation, the noun following the article may be understood as a singular expression or a plural expression.

In the embodiments of the present disclosure, "multiple" means two or more.

In some embodiments, terms such as "at least one of", "one or more", "a plurality of", "multiple" can be interchanged.

In some embodiments, expressions such as "at least one of A, B", "A and/or B", "in one case A, in another case B", "in response to one case A, in response to another case B" may include the following technical solutions depending on the situation: in some embodiments A (A is performed regardless of B); in some embodiments B (B is performed regardless of A); in some embodiments selection from A and B is performed (A and B are selectively performed); in some embodiments A and B (both A and B are performed). The same applies when there are more branches such as A, B, C.

In some embodiments, expressions such as "A or B" may include the following technical solutions depending on the situation: in some embodiments A (A is performed regardless of B); in some embodiments B (B is performed regardless of A); in some embodiments selection from A and B is performed (A and B are selectively performed). The same applies when there are more branches such as A, B, C.

Prefixes such as "first", "second" in the embodiments of the present disclosure are only used to distinguish different objects of description, and do not impose restrictions on the position, order, priority, quantity, or content of the objects of description. The statements of the objects of description refer to the claims or the context in the embodiments, and should not cause unnecessary restrictions due to the use of prefixes. For example, if the object of description is "field", then the ordinal numbers before "field" in "first field" and "second field" do not limit the position or order between the "fields", and "first" and "second" do not limit whether the "fields" they modify are in the same message, nor do they limit the order of the "first field" and the "second field". For another example, if the object of description is "level", then the ordinal numbers before "level" in "first level" and "second level" do not limit the priority between the "levels". For another example, the quantity of the objects of description is not limited by the ordinal numbers, and can be one or more. For example, with "first device", the quantity of "devices" can be one or more. In addition, the objects modified by different prefixes can be the same or different. For example, if the object of description is "device", then "first device" and "second device" can be the same device or different devices, and their types can be the same or different. For another example, if the object of description is "information", then "first information" and "second information" can be the same information or different information, and their content can be the same or different.

In some embodiments, "including A", "containing A", "for indicating A", "carrying A" can be interpreted as directly carrying A, or indirectly indicating A.

In some embodiments, devices and apparatuses can be interpreted as physical or virtual, and their names are not limited to those recorded in the embodiments. In some cases, they can also be understood as "equipment", "device", "circuit", "network element", "node", "function", "unit", "component", "section", "system", "network", "entity", "subject", etc.

In some embodiments, "network" can be interpreted as a device included in the network, for example, an access network device, a core network device, etc.

In some embodiments, "access network device (AN device)" may also be referred to as "radio access network device (RAN device)", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, obtaining data, information, etc. shall comply with the laws and regulations of the country where they are located.

In some embodiments, data, information, etc. can be obtained after obtaining user consent.

In addition, each element, each row, or each column in the tables of the embodiments of the present disclosure can be implemented as an independent embodiment, and any combination of any elements, any rows, or any columns can also be implemented as an independent embodiment.

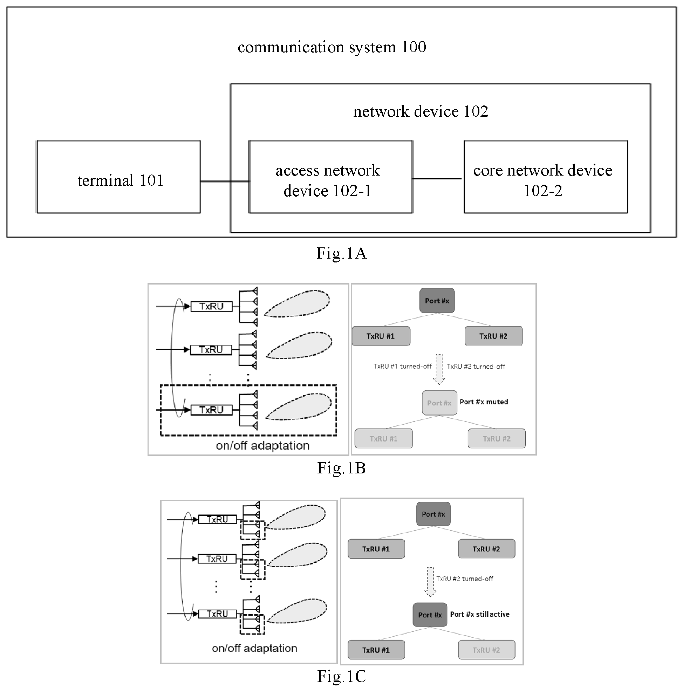

FIG. 1A is a schematic diagram of an architecture of a communication system according to an embodiment of the present disclosure.

As shown in FIG. 1A, a communication system 100 includes a terminal 101 and a network device 102.

In some embodiments, the terminal 101 includes, for example, at least one of a mobile phone, a wearable device, an Internet of Things device, a car with communication capabilities, a smart car, a tablet (Pad), a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, but is not limited thereto.

In some embodiments, the network device 102 may include, but is not limited to, at least one of an access network device 102-1 and a core network device 102-2.

In some embodiments, the access network device 102-1 is, for example, a node or device that connects a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, an access node in a Wi-Fi system, but is not limited thereto.

In some embodiments, the access network device 102-1 may be composed of a central unit (CU) and a distributed unit (DU), where the CU may also be referred to as a control unit. Using a CU-DU structure, the protocol layers of the access network device can be split, the functions of some protocol layers are placed in the CU for centralized control, and the functions of the remaining part or all of the protocol layers are distributed in the DUs, which are centrally controlled by the CU, but is not limited thereto.

In some embodiments, the core network device 102-2 may be a single device, including one or more network elements, etc., or may be multiple devices or device groups. The network elements may be virtual or physical. The core network includes, for example, at least one of an Evolved Packet Core (EPC), a 5G Core Network (5GCN), and a Next Generation Core (NGC).

In some embodiments, the technical solution of the present disclosure can be applied to an Open RAN architecture. In this case, the interfaces between access network devices or within an access network device involved in the embodiments of the present disclosure may become internal interfaces of Open RAN, and the processes and information interactions between these internal interfaces can be implemented through software or programs.

In some embodiments, in some embodiments, the terminal 101 is connected to the core network device 102-2 through the access network device 102-1.

It can be understood that the communication system described in the embodiments of the present disclosure is intended to more clearly illustrate the technical solutions of the embodiments of the present disclosure, and does not constitute a limitation on the technical solutions proposed in the embodiments of the present disclosure. A person of ordinary skill in the art can understand that as the system architecture evolves and new business scenarios emerge, the technical solutions proposed in the embodiments of the present disclosure are equally applicable to similar technical problems.

The following embodiments of the present disclosure can be applied to the communication system 100 shown in FIG. 1A, or some entities thereof, but are not limited thereto. The entities shown in FIG. 1A are examples. The communication system may include all or some of the entities in FIG. 1A, or may include other entities not shown in FIG. 1A. The number and form of each entity are arbitrary, each entity may be physical or virtual, and the connection relationships between the entities are examples. The entities may be unconnected or connected, and the connection may be in any manner, may be direct connection or indirect connection, and may be wired connection or wireless connection.

Various embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, systems using other communication methods, next-generation systems extended based on them, etc. In addition, multiple systems can be combined (for example, LTE or LTE-A and 5G, etc.) for application.

In the embodiments of the present disclosure, considering dynamic adaptation of spatial elements or transmission power, Release 18 defines channel state information (CSI) reporting with sub-configuration granularity. For the same CSI report configuration, L sub-configurations can be included, and each sub-configuration is associated with a specific spatial domain (SD) adaptation pattern and/or power domain (PD) adaptation pattern.

In some embodiments, at least one of the following adaptation manners may be included but is not limited to:
Type 1 SD (also referred to as a first type of SD in subsequent embodiments): a CSI-RS resource corresponding to type 1 SD corresponds to a plurality of SD patterns. Referring to FIG. 1B, in the type 1 SD manner, port #x is in an off state under SD pattern #2.
Type 2 SD (also referred to as a second type of SD in subsequent embodiments): a CSI-RS resource corresponding to type 2 SD corresponds to one SD pattern, but the number of antenna elements mapped by the same antenna port is different, and different SD patterns correspond to the same quantity of antenna ports. Referring to FIG. 1C, in the type 2 SD manner, when port #x is mapped to different antenna elements, port #x is still in an active state.

PD: one CSI-RS resource can correspond to different power control offset values. The power control offset is used to indicate a power offset value between a physical downlink shared channel (PDSCH) resource element (RE) and a non-zero power channel state information reference signal (NZP CSI-RS) RE.

In some embodiments, when the CSI report configuration includes a plurality of sub-configurations, the configuration manner of the sub-configurations may correspond to any one of the following adaptation manners:
First, only type 1 SD adaptation;
Second, only type 2 SD adaptation;
Third, only PD adaptation;
Fourth, joint adaptation between type 1 SD and PD;
Fifth, joint adaptation between type 2 SD and PD.

Considering that under type 1 SD, different SD patterns correspond to different quantities of antenna ports, i.e., the quantity of antenna ports is variable, but under type 2 SD, different SD patterns correspond to the same quantity of antenna ports, i.e., the quantity of antenna ports is constant, joint adaptation between type 1 SD and type 2 SD is not supported.

In order to reduce the energy consumption overhead of the network device, for example but not limited to a network energy saving (NES) scenario, the network device 102 can dynamically change the number of spatial elements or the transmission power, and accordingly, the configuration manner of the sub-configurations can be changed. In order to improve the usability for controlling network energy consumption overhead and avoid that the quantity of antenna ports configured by the network device exceeds the capability of the terminal, the present disclosure provides the following method for determining a port quantity, a device, and storage medium.

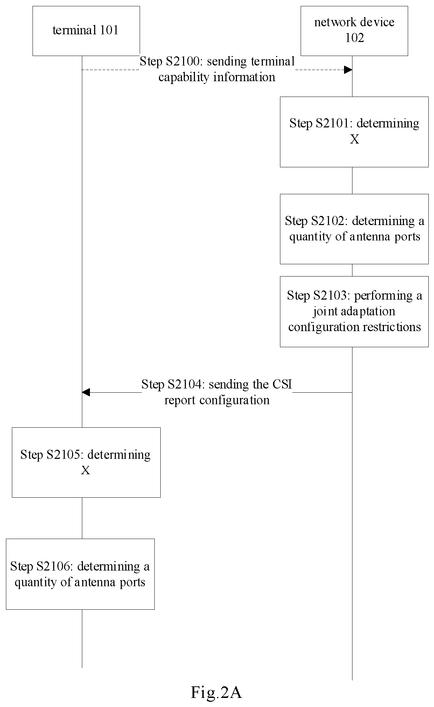

FIG. 2A is an interaction schematic diagram of a method for determining a port quantity according to an embodiment of the present disclosure. As shown in FIG. 2A, an embodiment of the present disclosure relates to a method for determining a port quantity, and the method includes:
In step S2100, the terminal 101 sends terminal capability information.

In some embodiments, the terminal capability information is used to indicate an antenna port capability supported by the terminal 101.

For example, the terminal capability information is used to indicate whether the terminal 101 supports dynamic change of the quantity of antenna ports.

For example, the terminal capability information is used to indicate a maximum quantity of antenna ports supported by the terminal 101.

For example, the terminal capability information is used to indicate whether the terminal 101 supports dynamic change of the quantity of antenna ports, and a maximum quantity of antenna ports supported by the terminal 101.

In some embodiments, the terminal 101 can report the terminal capability information to the network device 102 via a radio resource control (RRC) message.

In some embodiments, the network device 102 receives the terminal capability information.

In step S2101, the network device 102 determines X.

Here, X is associated with sub-configurations configured or activated in the CSI report configuration. It can be understood that X may refer to the number of sub-configurations configured in the CSI report configuration, or the number of sub-configurations activated in the CSI report configuration.

In some embodiments, the network device 102 can determine X based on the type of the CSI-RS resource and/or the type of the CSI report.

In one example, when the network device 102 determines X based on the type of the CSI-RS resource, it may include any one of the following:
If the CSI-RS resource is a periodic (P) resource, determine that X is equal to a total quantity of sub-configurations configured in the CSI report configuration.

For example, if total L sub-configurations are configured in the CSI report configuration, for a P CSI resource, X = L.

If the CSI-RS resource is a semi-persistent (SP) resource, determine that X is equal to a total quantity of sub-configurations configured in the CSI report configuration, or determine that X is equal to the quantity of sub-configurations in an active state corresponding to the CSI report configuration.

For example, if total L sub-configurations are configured in the CSI report configuration, for an SP CSI resource, X = L, where L is a positive integer.

For another example, if total L sub-configurations are configured in the CSI report configuration and the number of sub-configurations in an active state is N, where N is less than or equal to L, for an SP CSI resource, X = N, where N and L are positive integers.

If the CSI-RS resource is an aperiodic (AP) resource, determine that X is equal to the quantity of sub-configurations in an active state corresponding to the CSI report configuration.

For another example, if total L sub-configurations are configured in the CSI report configuration and the number of sub-configurations in an active state is N, where N is less than or equal to L, for an AP CSI resource, X = N, where N and L are positive integers.

In one example, when the network device 102 determines X based on the type of the CSI report, it may include any one of the following:
If the CSI report is a P CSI report, determine that X is equal to a total quantity of sub-configurations configured in the CSI report configuration.

For example, if total L sub-configurations are configured in the CSI report configuration, for a P CSI report, X = L.

If the CSI report is an SP CSI report, determine that X is equal to a total quantity of sub-configurations configured in the CSI report configuration, or determine that X is equal to the quantity of sub-configurations in an active state corresponding to the CSI report configuration.

For example, if total L sub-configurations are configured in the CSI report configuration, for an SP CSI report, X = L, where L is a positive integer.

For another example, if total L sub-configurations are configured in the CSI report configuration and the number of sub-configurations in an active state is N, where N is less than or equal to L, for an SP CSI report, X = N, where N and L are positive integers.

If the CSI report is an AP CSI report, determine that X is equal to the quantity of sub-configurations in an active state corresponding to the CSI report configuration.

For another example, if total L sub-configurations are configured in the CSI report configuration and the number of sub-configurations in an active state is N, where N is less than or equal to L, for an AP CSI report, X = N, where N and L are positive integers.

In one example, the network device 102 can determine X based on the type of the CSI-RS resource and/or the type of the CSI report, which may include but is not limited to any one of the following:
For a P CSI-RS resource and/or a P CSI report, X = L;
For an SP CSI-RS resource and/or an SP CSI report, X = L or X = N;
For an AP CSI-RS resource and/or an AP CSI report, X = N;
For a combination of other types of CSI-RS resources and other types of CSI reports, for example, for an SP CSI-RS resource and an AP CSI report, X = N.

The above are only exemplary descriptions, and solutions for determining the value of X should all fall within the protection scope of the present disclosure.

In step S2102, the network device 102 determines the quantity of antenna ports.

In some embodiments, the quantity of antenna ports is the quantity of antenna ports corresponding to a CSI-RS resource in a CSI report configuration.

In some embodiments, the quantity of antenna ports determined by the network device 102 does not exceed the terminal capability.

In some embodiments, the CSI report configuration includes a plurality of sub-configurations.

In some embodiments, the CSI-RS resource is associated with M sub-configurations among X sub-configurations included in the CSI report configuration. Here, X and M are positive integers, and M is less than or equal to X.

Here, X is associated with sub-configurations configured or activated in the CSI report configuration. It can be understood that X may refer to the number of sub-configurations configured in the CSI report configuration, or the number of sub-configurations activated in the CSI report configuration.

Here, M is the quantity of sub-configurations associated with the CSI-RS resource, and the sub-configurations associated with the CSI-RS resource belong to the X sub-configurations.

In some embodiments, the network device 102 may first determine the value of X based on step S2101 and then determine the quantity of antenna ports.

In some embodiments, the scheme for the network device 102 to determine the quantity of antenna ports corresponding to a CSI-RS resource for a CSI report configuration is as follows:
First manner: when the sub-configurations in the CSI report configuration correspond to SD adaptation and the corresponding SD type is the first type of SD (type 1 SD), determine that the quantity of antenna ports is equal to a first value.

Here, each sub-configuration in the CSI report configuration is associated with all resources in a set. In the embodiments of the present disclosure, the set refers to a CSI-RS resource set, and all resources in the set refer to all CSI-RS resources in the CSI-RS resource set. Here, one CSI-RS resource in the set is associated with all sub-configurations, and all CSI-RS resources in the set have the same quantity of antenna ports.

For example, the first value may be a maximum between a value P and a sum of M values Ps, where the value Ps is the quantity of antenna ports corresponding to a sub-configuration s among the M sub-configurations, and the value P is a default quantity of antenna ports corresponding to the CSI-RS resource.

For example, the quantity of $antenna ports = max \left({\sum }_{s = 1}^{M} {P}_{s} , P\right)$, where the value Ps is the quantity of antenna ports corresponding to a sub-configuration s among the M sub-configurations, and the value P is a default quantity of antenna ports corresponding to the CSI-RS resource.

Here, the default quantity of antenna ports can be determined in any of the following manners:
The network device 102 determines the default quantity of antenna ports and then configures it to the terminal 101 through an RRC parameter nrofPorts;
The network device 102 determines, in on a predefined manner, for example, a protocol agreement, that the default quantity of antenna ports is equal to the maximum quantity of antenna ports corresponding to the CSI-RS resource, for example, the default quantity of antenna ports is 32.

Second manner: when the sub-configurations in the CSI report configuration correspond to SD adaptation and the corresponding SD type is the second type of SD (type 2 SD), the network device 102 can determine that the quantity of antenna ports is equal to a product of M and a value P.

Here, the value P is a default quantity of antenna ports corresponding to the CSI-RS resource. The manner of determining the default quantity of antenna ports has been described in the above embodiments, and will not be repeated here. M is the number of sub-configurations associated with the CSI-RS resource, and the sub-configurations associated with the CSI-RS resource belong to the X sub-configurations.

Here, each sub-configuration in the CSI report configuration can be associated with some resources in a set. In the embodiments of the present disclosure, the set refers to a CSI-RS resource set, and some resources in the set refer to some CSI-RS resources in the CSI-RS resource set. Here, one CSI-RS resource in the set is associated with only one sub-configuration (in the embodiments of the present disclosure, a single CSI-RS resource can only be associated with one SD), and all CSI-RS resources in the set have the same quantity of antenna ports.

For example, the quantity of antenna ports = M × P, where the value P is a default quantity of antenna ports corresponding to the CSI-RS resource. M is the number of sub-configurations associated with the CSI-RS resource, and the sub-configurations associated with the CSI-RS resource belong to the X sub-configurations.

Third manner: when the sub-configurations in the CSI report configuration correspond to PD adaptation, the network device 102 can determine that the quantity of antenna ports is equal to a product of M and a value P. Here, the value P is a default quantity of antenna ports corresponding to the CSI-RS resource. The manner of determining the default quantity of antenna ports has been described in the above embodiments, and will not be repeated here. M is the number of sub-configurations associated with the CSI-RS resource, and the sub-configurations associated with the CSI-RS resource belong to the X sub-configurations.

Here, each sub-configuration in the CSI report configuration is associated with all resources in a set. In the embodiments of the present disclosure, the set refers to a CSI-RS resource set, and some resources in the set refer to some CSI-RS resources in the CSI-RS resource set. Here, one CSI-RS resource in the set is associated with all sub-configurations, and each sub-configuration corresponds to an offset value, and all resources in the set have the same quantity of antenna ports.

For example, the quantity of antenna ports = M × P, where the value P is a default quantity of antenna ports corresponding to the CSI-RS resource. M is the number of sub-configurations associated with the CSI-RS resource, and the sub-configurations associated with the CSI-RS resource belong to the X sub-configurations.

Fourth manner: when the sub-configurations in the CSI report configuration correspond to joint adaptation between SD and PD, specifically, joint adaptation between the first type of SD (type 1 SD) and PD, it can be determined that the quantity of antenna ports is equal to a first value.

Here, a CSI-RS resource corresponding to the first type of SD corresponds to a plurality of SD patterns.

Here, the joint adaptation between the first type of SD and PD may refer to: the same CSI-RS resource can correspond to a plurality of SD patterns, and additionally, different sub-configurations under the same SD pattern can correspond to different PD offsets.

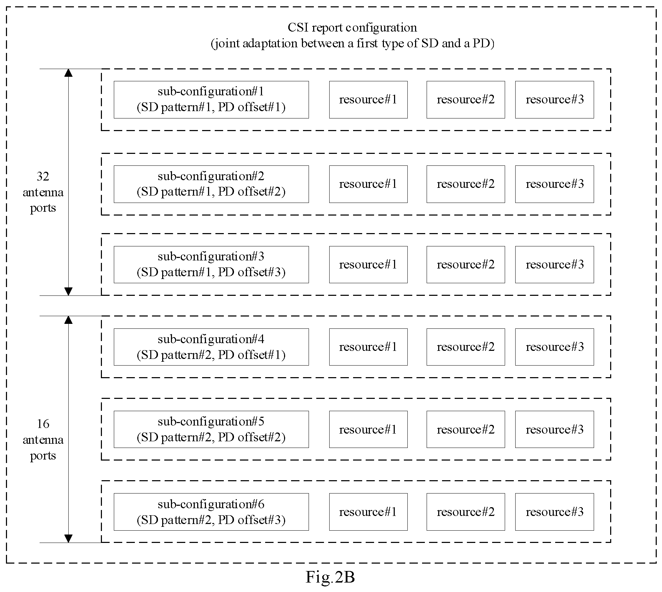

For example, as shown in FIG. 2B, resource #1 corresponds to SD pattern #1 and SD pattern #2, where SD pattern #1 corresponds to the quantity of antenna ports of 32, and SD pattern #2 corresponds to the quantity of antenna ports of 16. In addition, under SD pattern #1, sub-configuration #1 to sub-configuration #3 correspond to different PD offsets.

For example, the first value may be a maximum between a value P and a sum of M values Ps, where the value Ps is the quantity of antenna ports corresponding to a sub-configuration s among the M sub-configurations, and the value P is a default quantity of antenna ports corresponding to the CSI-RS resource. That is, the minimum value of the first value can be limited to be P.

For example, the quantity of antenna ports $= max \left({\sum }_{s = 1}^{M} {P}_{s} , P\right)$, where the value Ps is the quantity of antenna ports corresponding to a sub-configuration s among the M sub-configurations, and the value P is a default quantity of antenna ports corresponding to the CSI-RS resource.

For example, the first value may be a sum of M values Ps, where the value Ps is the quantity of antenna ports corresponding to a sub-configuration s among the M sub-configurations. That is, the minimum value of the first value may not be limited.

For example, the quantity of $antenna ports = {\sum }_{s = 1}^{M} {P}_{s}$, where the value Ps is the quantity of antenna ports corresponding to a sub-configuration s among the M sub-configurations.

For example, the first value may be a sum of L values Ps, where the value Ps is the quantity of antenna ports corresponding to a sub-configuration s among the M sub-configurations. Similarly, the minimum value of the first value may not be limited.

For example, the quantity of $antenna ports = {\sum }_{s = 1}^{L} {P}_{s}$, where the value Ps is the quantity of antenna ports corresponding to a sub-configuration s among the M sub-configurations. L is a total quantity of sub-configurations configured in the CSI report configuration.

Alternatively, in the fourth manner, when the sub-configurations in the CSI report configuration correspond to joint adaptation between SD and PD, specifically, joint adaptation between the first type of SD (type 1 SD) and PD, it can be determined that the quantity of antenna ports is equal to a product of M and a value P.

Here, a CSI-RS resource corresponding to the first type of SD corresponds to a plurality of SD patterns.

Here, the joint adaptation between the first type of SD and PD may refer to: the same CSI-RS resource can correspond to a plurality of SD patterns, and additionally, different sub-configurations under the same SD pattern correspond to different PD offsets, for example, as shown in FIG. 2B.

At this time, the quantity of antenna ports can be equal to the product of M and P, i.e., the quantity of antenna ports = M × P. Here, the value P is a default quantity of antenna ports corresponding to the CSI-RS resource. M is the number of sub-configurations associated with the CSI-RS resource, and the sub-configurations associated with the CSI-RS resource belong to the X sub-configurations.

It should be noted that, in the fourth manner, the network device 102 needs to perform joint adaptation configuration restrictions in order to determine that the quantity of antenna ports is equal to the product of M and P.

In one example, the network device 102 configures the quantity of antenna ports corresponding to the M sub-configurations to be equal to a value P. That is, the network device 102 configures the quantity of antenna ports corresponding to each of the M sub-configurations to be P. P is the default quantity of antenna ports corresponding to the CSI-RS resource.

For the terminal 101, when the CSI-RS resource corresponds to the joint adaptation between the first type of SD and PD, it can be determined that the quantity of antenna ports corresponding to the M sub-configurations is equal to P.

In one example, if Ps is less than P, where the value Ps is the quantity of antenna ports corresponding to a sub-configuration s among the M sub-configurations, and P is the default quantity of antenna ports corresponding to the CSI-RS resource, then under the first type of SD pattern, the network device 102 will not configure a PD pattern for the CSI-RS resource. Here, for a sub-configuration for which no PD pattern is configured, the PD offset can be defaulted to 0. Alternatively, under the condition that sub-configuration s and sub-configuration m (s ≠ m) correspond to the same type 1 SD pattern, the network device 102 will not configure different PD offsets for sub-configuration s and sub-configuration m.

Correspondingly, the terminal 101 does not expect that the CSI-RS resource is configured with a PD pattern under the first type of SD pattern. Here, for a sub-configuration for which no PD pattern is configured, the PD offset can be defaulted to 0. Alternatively, under the condition that sub-configuration s and sub-configuration m (s ≠ m) correspond to the same type 1 SD pattern, the terminal does not expect that sub-configuration s and sub-configuration m are configured with different PD offsets.

In one example, if Pc is less than P, where the value Pc is the quantity of antenna ports corresponding to a pattern c among different SD patterns, and P is the default quantity of antenna ports corresponding to the CSI-RS resource, then under the SD pattern corresponding to the value Pc, the network device 102 will not configure a plurality of PD patterns for the CSI-RS resource.

Correspondingly, the terminal 101 does not expect that the CSI-RS resource is configured with a plurality of PD patterns under the SD pattern corresponding to the value Pc.

In some embodiments, in order to reduce computational load and reduce the complexity of the terminal 101, the network device 102 may also not configure the joint adaptation between type 1 SD and PD. That is, if joint adaptation between SD and PD is configured, only joint adaptation between the second type of SD (type 2 SD) and PD will be configured.

Correspondingly, for the terminal 101, the terminal 101 does not expect that the CSI report configuration is a CSI report configuration corresponding to joint adaptation between the first type of SD (type 1 SD) and PD.

Fifth manner: when the sub-configurations in the CSI report configuration correspond to joint adaptation between SD and PD, specifically, joint adaptation between the second type of SD (type 2 SD) and PD, it can be determined that the quantity of antenna ports is equal to a product of M and a value P.

Here, a CSI-RS resource corresponding to the second type of SD corresponds to one SD pattern.

Here, the joint adaptation between the second type of SD and PD may refer to: the same CSI-RS resource corresponds to one SD pattern, and additionally, different sub-configurations correspond to different PD offsets.

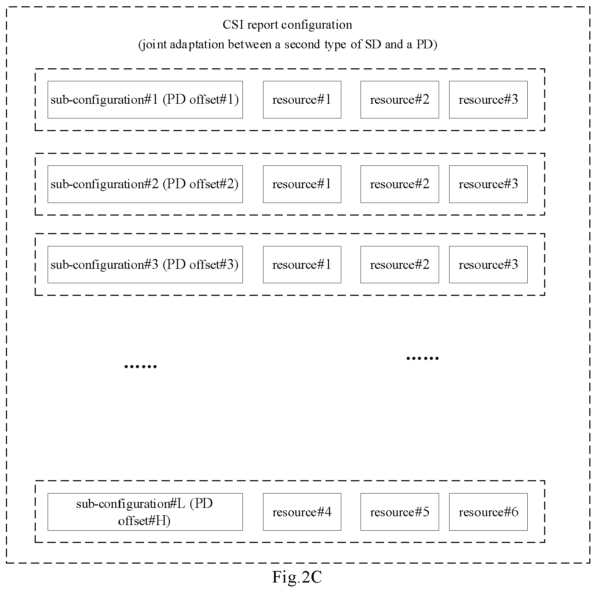

For example, as shown in FIG. 2C, resource #1 corresponds to the same SD pattern, i.e., SD pattern #1. Resource #4 corresponds to the same SD pattern, i.e., SD pattern #2. SD pattern #1 and SD pattern #2 correspond to the same quantity of antenna ports, both being 8. And different sub-configurations correspond to different PD offsets.

For example, at this time, the quantity of antenna ports = M × P, where the value P is a default quantity of antenna ports corresponding to the CSI-RS resource. M is the number of sub-configurations associated with the CSI-RS resource, and the sub-configurations associated with the CSI-RS resource belong to the X sub-configurations.

The above are only exemplary descriptions, and solutions for the network device 102 to determine the quantity of antenna ports should all fall within the protection scope of the present disclosure.

In step S2103, the network device 102 performs a joint adaptation configuration restrictions.

In some embodiments, when the sub-configurations in the CSI report configuration correspond to joint adaptation between SD and PD, specifically, joint adaptation between the first type of SD (type 1 SD) and PD, the network device 102 can perform the joint adaptation configuration restrictions. Specific implementations have been described in the fourth manner in step S2102, and will not be repeated here.

In some embodiments, the network device 102 may not configure joint adaptation between type 1 SD and PD. That is, if joint adaptation between SD and PD is configured, only joint adaptation between the second type of SD (type 2 SD) and PD will be configured.

In step S2104, the network device 102 sends the CSI report configuration to the terminal 101.

In some embodiments, the quantity of antenna ports corresponding to the CSI-RS resource configured by the network device 102 for the CSI report configuration should not exceed the terminal capability.

In some embodiments, the terminal 101 receives the CSI report configuration.

In some embodiments, after receiving the CSI report configuration, the terminal 101 can determine a reference resource corresponding to the CSI report, receive the CSI-RS based on the reference resource, measure the CSI-RS to generate one or more CSIs, and send a CSI report, where the CSI report includes at least one of the generated CSIs.

For example, if the terminal 101 does not receive all resources associated with all sub-configurations configured in the CSI report configuration no later than a time slot corresponding to the reference resource, the terminal discards the CSI corresponding to the CSI report configuration.

For example, if the terminal 101 does not receive any resource associated with all sub-configurations configured in the CSI report configuration no later than a time slot corresponding to the reference resource, the terminal discards the CSI corresponding to the CSI report configuration.

For example, if the terminal 101 does not receive all resources associated with all sub-configurations activated in the CSI report configuration no later than a time slot corresponding to the reference resource, the terminal discards the CSI corresponding to the CSI report configuration.

For example, if the terminal 101 does not receive any resource associated with all sub-configurations activated in the CSI report configuration no later than a time slot corresponding to the reference resource, the terminal discards the CSI corresponding to the CSI report configuration.

In step S2105, the terminal 101 determines X.

In some embodiments, X is associated with sub-configurations configured or activated in the CSI report configuration. It can be understood that X may refer to the number of sub-configurations configured in the CSI report configuration, or the number of sub-configurations activated in the CSI report configuration.

In some embodiments, the terminal 101 can determine X based on the type of the CSI-RS resource and/or the type of the CSI report.

In some embodiments, for the manner in which the terminal 101 determines X is similar to the manner in which the network device 102 determines X, and for details reference can be made to the implementation of step S2101, which will not be repeated here.

In step S2106, the terminal 101 determines the quantity of antenna ports.

In some embodiments, the quantity of antenna ports is the quantity of antenna ports corresponding to a CSI-RS resource in a CSI report configuration.

In some embodiments, the quantity of antenna ports determined by the terminal 101 does not exceed the terminal capability.

In some embodiments, the CSI report configuration includes a plurality of sub-configurations.

In some embodiments, the CSI-RS resource is associated with M sub-configurations among X sub-configurations included in the CSI report configuration. Here, X and M are positive integers, and M is less than or equal to X.

In some embodiments, the terminal 101 may first determine the value of X based on step S2104 and then determine the quantity of antenna ports.

In some embodiments, the scheme for the terminal 101 to determine the quantity of antenna ports is as follows:
First manner: when the sub-configurations in the CSI report configuration correspond to SD adaptation and the corresponding SD type is the first type of SD (type 1 SD), determine that the quantity of antenna ports is equal to a first value.

For example, the first value may be a maximum between a value P and a sum of M values Ps, where the value Ps is the quantity of antenna ports corresponding to a sub-configuration s among the M sub-configurations, and the value P is a default quantity of antenna ports corresponding to the CSI-RS resource.

For example, the quantity of $antenna ports = max \left({\sum }_{s = 1}^{M} {P}_{s} , P\right)$, where the value Ps is the quantity of antenna ports corresponding to a sub-configuration s among the M sub-configurations, and the value P is a default quantity of antenna ports corresponding to the CSI-RS resource.

Here, the default quantity of antenna ports can be determined in any of the following manners:
The terminal 101 determines the default quantity of antenna ports based on an RRC parameter (e.g., nrofPorts) sent by the network device 102;
The terminal 101 determines, based on a predefined manner, for example, a protocol agreement, that the default quantity of antenna ports is equal to the maximum quantity of antenna ports corresponding to the CSI-RS resource, for example, the default quantity of antenna ports is 32.

Second manner: when the sub-configurations in the CSI report configuration correspond to SD adaptation and the corresponding SD type is the second type of SD (type 2 SD), the terminal 101 can determine that the quantity of antenna ports is equal to a product of M and a value P. For example, the quantity of antenna ports = M × P, where the value P is a default quantity of antenna ports corresponding to the CSI-RS resource. M is the number of sub-configurations associated with the CSI-RS resource, and the sub-configurations associated with the CSI-RS resource belong to the X sub-configurations.

Third manner: when the sub-configurations in the CSI report configuration correspond to PD adaptation, the terminal 101 can determine that the quantity of antenna ports is equal to a product of M and a value P.

For example, the quantity of antenna ports = M × P, where the value P is a default quantity of antenna ports corresponding to the CSI-RS resource. M is the number of sub-configurations associated with the CSI-RS resource, and the sub-configurations associated with the CSI-RS resource belong to the X sub-configurations.

Fourth manner: when the sub-configurations in the CSI report configuration correspond to joint adaptation between SD and PD, specifically, joint adaptation between the first type of SD (type 1 SD) and PD, the terminal 101 can determine that the quantity of antenna ports is equal to a first value.

Here, a CSI-RS resource corresponding to the first type of SD corresponds to a plurality of SD patterns.

Here, the joint adaptation between the first type of SD and PD may refer to: the same CSI-RS resource can correspond to a plurality of SD patterns, and additionally, different sub-configurations under the same SD pattern can correspond to different PD offsets.

For example, the first value may be a maximum between a value P and a sum of M values Ps, where the value Ps is the quantity of antenna ports corresponding to a sub-configuration s among the M sub-configurations, and the value P is a default quantity of antenna ports corresponding to the CSI-RS resource. That is, the minimum value of the first value can be limited to be P.

For example, the quantity of $antenna ports = max \left({\sum }_{s = 1}^{M} {P}_{s} , P\right)$, where the value Ps is the quantity of antenna ports corresponding to a sub-configuration s among the M sub-configurations, and the value P is a default quantity of antenna ports corresponding to the CSI-RS resource.

For example, the first value may be a sum of M values Ps, where the value Ps is the quantity of antenna ports corresponding to a sub-configuration s among the M sub-configurations. That is, the minimum value of the first value may not be limited.

For example, the quantity of $antenna ports = {\sum }_{s = 1}^{M} {P}_{s}$, where the value Ps is the quantity of antenna ports corresponding to a sub-configuration s among the M sub-configurations.

For example, the first value may be a sum of L values Ps, where the value Ps is the quantity of antenna ports corresponding to a sub-configuration s among the M sub-configurations. Similarly, the minimum value of the first value may not be limited.

For example, the quantity of $antenna ports = {\sum }_{s = 1}^{L} {P}_{s}$, where the value Ps is the quantity of antenna ports corresponding to a sub-configuration s among the M sub-configurations. L is a total quantity of sub-configurations configured in the CSI report configuration.

For example, as shown in FIG. 2B, resource #1 corresponds to SD pattern #1 and SD pattern #2, where SD pattern #1 corresponds to the quantity of antenna ports of 32, and SD pattern #2 corresponds to the quantity of antenna ports of 16. In addition, under SD pattern #1, sub-configuration #1 to sub-configuration #3 correspond to different PD offsets. P is 32.

Here, the quantity of antenna ports corresponding to resource $# 1 = max \left({\sum }_{s = 1}^{M} {P}_{s} , P\right) = max \left(3\times 32+3\times 16, 32\right) = 144$ .

Alternatively, the quantity of antenna ports corresponding to resource $# 1 = {\sum }_{s = 1}^{M} {P}_{s} = 3 \times 32 + 3 \times 16 = 144$ .

Alternatively, the quantity of antenna ports corresponding to resource $# 1 = {\sum }_{s = 1}^{L} {P}_{s} = 144$.

Alternatively, in the fourth manner, when the sub-configurations in the CSI report configuration correspond to joint adaptation between SD and PD, specifically, joint adaptation between the first type of SD (type 1 SD) and PD, the terminal 101 can determine that the quantity of antenna ports is equal to a product of M and a value P.

For example, at this time, the quantity of antenna ports = M × P, where the value P is a default quantity of antenna ports corresponding to the CSI-RS resource. M is the number of sub-configurations associated with the CSI-RS resource, and the sub-configurations associated with the CSI-RS resource belong to the X sub-configurations.

In one example, the CSI report configuration corresponds to joint adaptation between the first type of SD (type 1 SD) and PD, and the CSI-RS resource corresponds to joint adaptation between the first type of SD and PD, then the terminal 101 determines that the quantity of antenna ports corresponding to the M sub-configurations is equal to P. That is, the terminal 101 determines that the quantity of antenna ports of each of the M sub-configurations is configured as P.

In one example, when the sub-configurations in the CSI report configuration correspond to joint adaptation between the first type of SD (type 1 SD) and PD, and the CSI-RS resource corresponds to joint adaptation between the first type of SD and PD, if Ps is less than P, the terminal 101 does not expect that the CSI-RS resource is configured with a PD pattern under the first type of SD pattern. Here, for a sub-configuration for which no PD pattern is configured, the PD offset can be defaulted to 0. Alternatively, under the condition that sub-configuration s and sub-configuration m (s ≠ m) correspond to the same type 1 SD pattern, the terminal 101 does not expect that sub-configuration s and sub-configuration m are configured with different PD offsets.

Correspondingly, the terminal 101 determines that the quantity of antenna ports is equal to the product of M and P.

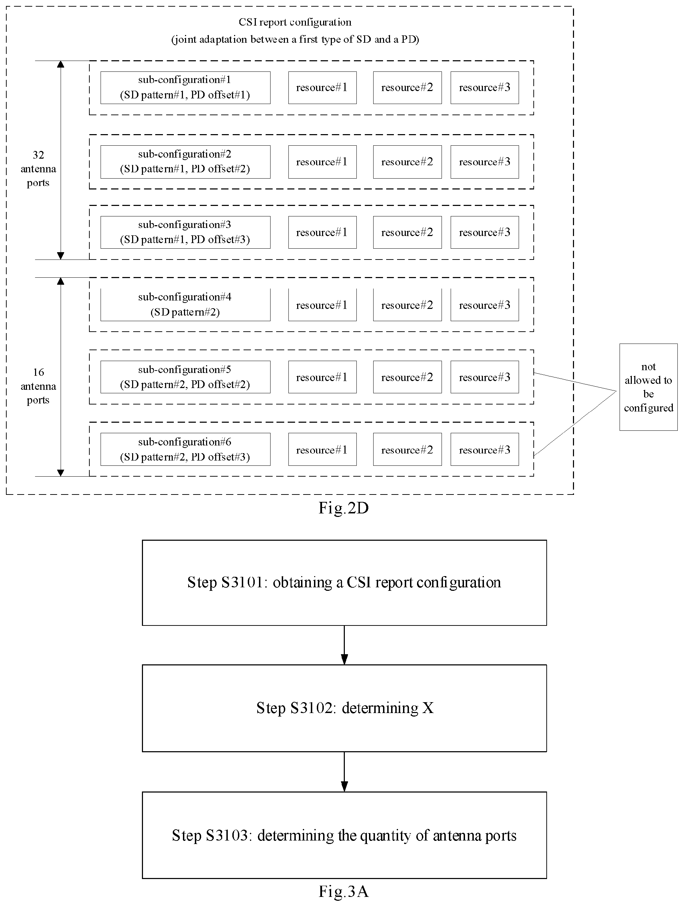

For example, as shown in FIG. 2D, the sub-configurations in the CSI report configuration correspond to joint adaptation between the first type of SD (type 1 SD) and PD, and resource #1 corresponds to joint adaptation between the first type of SD and PD. Sub-configuration #1 to sub-configuration #3 correspond to SD pattern #1, and the corresponding quantity of antenna ports is 32. Sub-configuration #4 to sub-configuration #6 correspond to SD pattern #1, and the corresponding quantity of antenna ports is 16. P is 32, and the PD offset of sub-configuration #4 is 0. At this time, it can be concluded that sub-configuration #5 and sub-configuration #6, because the quantity of antenna ports is not equal to 32 and the PD offset is not 0, will not be configured in the CSI report configuration.

The terminal 101 determines that the quantity of antenna ports corresponding to resource #1 = 3×32+1×0 = 96.

In one example, when the sub-configurations in the CSI report configuration correspond to joint adaptation between the first type of SD (type 1 SD) and PD, if Pc is less than P, then the terminal 101 does not expect that the CSI-RS resource is configured with a plurality of PD patterns under the SD pattern corresponding to the value Pc. Here, the value Pc is the quantity of antenna ports corresponding to a pattern c among different SD patterns, and P is the default quantity of antenna ports corresponding to the CSI-RS resource.

In one example, the terminal 101 does not expect that the network device 102 configures joint adaptation between the first type of SD and PD. That is, if joint adaptation occurs, it will only be joint adaptation between the second type of SD and PD.

Fifth manner: when the sub-configurations in the CSI report configuration correspond to joint adaptation between SD and PD, specifically, joint adaptation between the second type of SD (type 2 SD) and PD, the terminal 101 can determine that the quantity of antenna ports is equal to a product of M and a value P.

For example, at this time, the quantity of antenna ports = M × P, where the value P is a default quantity of antenna ports corresponding to the CSI-RS resource. M is the number of sub-configurations associated with the CSI-RS resource, and the sub-configurations associated with the CSI-RS resource belong to the X sub-configurations.

For example, as shown in FIG. 2C, resource #1 corresponds to the same SD pattern, i.e., SD pattern #1. Resource #4 corresponds to the same SD pattern, i.e., SD pattern #2. SD pattern #1 and SD pattern #2 correspond to the same quantity of antenna ports, both being 8. And different sub-configurations correspond to different PD offsets. Then, the quantity of antenna ports corresponding to resource #1 = M × P = 3×8 = 24.

The above are only exemplary descriptions, and solutions for the terminal 101 to determine the quantity of antenna ports should all fall within the protection scope of the present disclosure.

In some embodiments, the names of information, etc., are not limited to those recorded in the embodiments. Terms such as "information", "message", "signal", "signaling", "report", "configuration", "indication", "instruction", "command", "channel", "parameter", "domain", "field", "symbol", "codeword", "codebook", "codepoint", "bit", "data", "program", "chip" can be interchanged.

In some embodiments, terms such as "send", "transmit", "report", "deliver", "communicate", "bidirectional communication", "send and/or receive" can be interchanged.

In some embodiments, terms such as "obtain", "acquire", "get", "receive", "communicate", "bidirectional communication", "send and/or receive" can be interchanged, and can be interpreted as receiving from another entity, obtaining from a protocol, obtaining from a higher layer, obtaining through self-processing, self-implementing, etc.

In some embodiments, terms such as "certain", "preset", "predefined", "set", "indicated", "a certain", "any", "first", "specified" can be interchanged. "Certain A", "preset A", "predefined A", "set A", "indicated A", "a certain A", "any A", "first A" can be interpreted as A pre-specified in a protocol, etc., or as A obtained through setting, configuration, or indication, etc., or as a certain A, any A, or first A, etc., but is not limited thereto.

In some embodiments, the method for determining a port quantity involved in the embodiments of the present disclosure may include at least one of steps S2101 to S2106. For example, step S2101 can be implemented as an independent embodiment, step S2102 can be implemented as an independent embodiment, step S2101+S2102 can be implemented as an independent embodiment, step S2103 can be implemented as an independent embodiment, step S2101+S2102+step S2103 can be implemented as an independent embodiment, step S2104 can be implemented as an independent embodiment, step S2105 can be implemented as an independent embodiment, step S2106 can be implemented as an independent embodiment, steps S2101 to S2106 can be implemented as an independent embodiment, but is not limited thereto.

In some embodiments, step S2101 is optional, and one or more of these steps may be omitted or replaced in different embodiments. For example, when the network device 102 does not need to determine X or has already determined X by other means, step S2101 may not be performed.

In some embodiments, step S2102 is optional, and one or more of these steps may be omitted or replaced in different embodiments. For example, when the network device 102 does not need to configure the quantity of antenna ports corresponding to a CSI-RS resource for a CSI report configuration, step S2102 may not be performed.

In some embodiments, step S2103 is optional, and one or more of these steps may be omitted or replaced in different embodiments. For example, when the network device 102 does not configure joint adaptation, step S2103 may not be performed.

In some embodiments, the order of execution of step S2102 and step S2103 is not limited.

In some embodiments, step S2104 is optional, and one or more of these steps may be omitted or replaced in different embodiments. For example, when the terminal 101 obtains the CSI report configuration by other means or from another executing entity, step S2104 may not be performed.

In some embodiments, step S2105 is optional, and one or more of these steps may be omitted or replaced in different embodiments. For example, when the terminal 101 does not need to determine X or has already determined X by other means, step S2105 may not be performed.

In some embodiments, step S2106 is optional, and one or more of these steps may be omitted or replaced in different embodiments. For example, when the terminal 101 does not need to configure the quantity of antenna ports corresponding to a CSI-RS resource for a CSI report configuration, step S2106 may not be performed.

In some embodiments, steps S2101 to S2106 are optional, and one or more of these steps may be omitted or replaced in different embodiments.

In the above embodiments, both the terminal and the network device can determine the quantity of antenna ports corresponding to a CSI-RS resource for a CSI report configuration, where the CSI report configuration includes a plurality of sub-configurations, and the CSI-RS resource is associated with M sub-configurations among X sub-configurations included in the CSI report configuration. X and M are positive integers, and M is less than or equal to X. It is avoided that the quantity of antenna ports scheduled by the network device exceeds the capability of the terminal, and the usability and reliability for controlling network energy consumption overhead are improved.

FIG. 3A is a flowchart of a method for determining a port quantity according to an embodiment of the present disclosure. As shown in FIG. 3A, an embodiment of the present disclosure relates to a method for determining a port quantity, which can be performed by the terminal 101, and the method includes:

Step S3101: obtaining a CSI report configuration.

In some embodiments, the CSI report configuration includes a plurality of sub-configurations.

In some embodiments, the terminal 101 can obtain the CSI report configuration from the network device 102, but is not limited thereto, and can also receive a CSI report configuration sent by another entity.

In some embodiments, the terminal 101 obtains a CSI report configuration determined according to predefined rules.

In some embodiments, the terminal 101 performs processing to obtain the CSI report configuration.

In some embodiments, step S3101 is omitted, and the terminal 101 implements the functions indicated by the CSI report configuration by itself, or the terminal 101 obtains the CSI report configuration based on predefined rules or protocol agreements, or the above functions are default or absent.

In some embodiments, the optional implementation of step S3101 can refer to the optional implementation of step S2104 in FIG. 2A and other related parts in the embodiments involved in FIG. 2A, which will not be repeated here.

Step S3102: determining X.

In some embodiments, the optional implementation of step S3101 can refer to the optional implementation of step S2105 in FIG. 2A and other related parts in the embodiments involved in FIG. 2A, which will not be repeated here.

Step S3103: determining the quantity of antenna ports.

In some embodiments, the quantity of antenna ports is the quantity of antenna ports corresponding to a CSI-RS resource in a CSI report configuration.

In some embodiments, the quantity of antenna ports determined by the terminal 101 does not exceed the terminal capability.

In some embodiments, the optional implementation of step S3101 can refer to the optional implementation of step S2106 in FIG. 2A and other related parts in the embodiments involved in FIG. 2A, which will not be repeated here.

In some embodiments, the method for determining a port quantity involved in the embodiments of the present disclosure may include at least one of steps S3101 to S3103. For example, step S3101 can be implemented as an independent embodiment, step S3102 can be implemented as an independent embodiment, step S3101+S3102 can be implemented as an independent embodiment, step S3103 can be implemented as an independent embodiment, steps S3101 to S3103 can be implemented as an independent embodiment, but is not limited thereto.

In the above embodiment, the terminal can determine the quantity of antenna ports, improving the usability and reliability for controlling network energy consumption overhead.

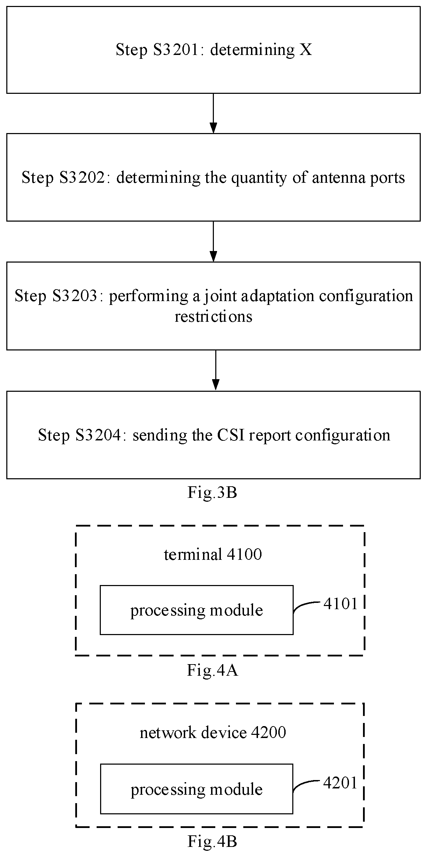

FIG. 3B is a flowchart of a method for determining a port quantity according to an embodiment of the present disclosure. As shown in FIG. 3B, an embodiment of the present disclosure relates to a method for determining a port quantity, which can be performed by the network device 102, and the method includes:

Step S3201: determining X.

In some embodiments, the optional implementation of step S3201 can refer to the optional implementation of step S2101 in FIG. 2A and other related parts in the embodiments involved in FIG. 2A, which will not be repeated here.

Step S3202: determining the quantity of antenna ports.

In some embodiments, the quantity of antenna ports is the quantity of antenna ports corresponding to a CSI-RS resource in a CSI report configuration.

In some embodiments, the quantity of antenna ports determined by the network device 102 does not exceed the terminal capability.

In some embodiments, the optional implementation of step S3202 can refer to the optional implementation of step S2102 in FIG. 2A and other related parts in the embodiments involved in FIG. 2A, which will not be repeated here.

Step S3203: performing a joint adaptation configuration restrictions.

In some embodiments, the optional implementation of step S3203 can refer to the optional implementation of step S2103 in FIG. 2A and other related parts in the embodiments involved in FIG. 2A, which will not be repeated here.

Step S3204: sending the CSI report configuration.

In some embodiments, the network device 102 sends the CSI report configuration to the terminal 101.

In some embodiments, the terminal 101 receives the CSI report configuration.

In some embodiments, the optional implementation of step S3203 can refer to the optional implementation of step S2104 in FIG. 2A and other related parts in the embodiments involved in FIG. 2A, which will not be repeated here.

In some embodiments, the method for determining a port quantity involved in the embodiments of the present disclosure may include at least one of steps S3201 to S3204. For example, step S3201 can be implemented as an independent embodiment, step S3202 can be implemented as an independent embodiment, step S3101+S3202 can be implemented as an independent embodiment, step S3203 can be implemented as an independent embodiment, step S3204 can be implemented as an independent embodiment, steps S3201 to S3204 can be implemented as an independent embodiment, but is not limited thereto.

In the above embodiment, the network device can determine the quantity of antenna ports, avoiding that the scheduled quantity of antenna ports exceeds the terminal capability, and improving the usability and reliability for controlling network energy consumption overhead.

The above process is further illustrated by the following examples:
In the embodiments of the present disclosure, the NES scenario is taken as an example. Of course, the solution of the present disclosure is not limited to the NES scenario. Here, a CSI report config includes a plurality of sub-configurations, and the CSI report config corresponds to joint adaptation between SD and PD. Corresponding rules are designed to determine the port counting rule corresponding to the CSI-RS resource.

### Terminal side:

Under the condition that a CSI report config includes a plurality of reporting sub-configurations, and the CSI report config corresponds to joint adaptation between SD and PD, if a CSI-RS resource is associated with M sub-configurations among X sub-configurations included in the report, the terminal determines the number of ports corresponding to the CSI-RS resource based on the following rules:
Solution 1: for joint adaptation between type 2 SD and PD, the number of occupied ports is equal to: M × P; Solution 2: for joint adaptation between type 1 SD and PD, the number of occupied ports is as follows:
Solution 2-1: $max \left({\sum }_{s = 1}^{M} {P}_{s} , P\right)$, or ${\sum }_{s = 1}^{M} {P}_{s}$, or ${\sum }_{s = 1}^{L} {P}_{s}$;
Solution 2-2: M × P;
Here, the quantity of antenna ports corresponding to the M sub-configurations is equal to P;
If the number of ports Ps of the SD corresponding to the CSI-RS is less than P, the terminal does not expect that the CSI-RS resource is configured with a plurality of PD patterns under the SD;
If Pc is less than P, the terminal does not expect that the CSI-RS resource is configured with a plurality of PD patterns under the SD pattern corresponding to the value Pc, where Pc is the quantity of antenna ports corresponding to pattern c among different SD patterns.

Solution 2-3: M × P, the terminal does not expect the configuration of joint adaptation between type 1 SD and PD;
Here, P is the default number of ports configured for the CSI-RS resource based on nrofPorts or the maximum number of antenna ports corresponding to the CSI-RS resource, Ps is the number of ports associated with sub-configuration s, and the CSI-RS resource is associated with sub-config s;
X is defined based on the following manners:
For a P CSI-RS resource, X = L, which is the number of configured sub-configurations;
For an SP CSI-RS resource, X = L, which is the number of configured sub-configurations, or X = N, which is the number of sub-configurations in an active state;
For an AP CSI-RS resource, X = N, which is the number of sub-configurations in an active state;
Alternatively, X can also be defined based on the following manners:
For a P CSI report, X = L, which is the number of configured sub-configurations;
For an SP CSI report, X = L, which is the number of configured sub-configurations, or X = N, which is the number of sub-configurations in an active state;
For an AP CSI report, X = N, which is the number of sub-configurations in an active state.

Network device side:
Under the condition that a CSI report config includes a plurality of reporting sub-configurations, and the CSI report config corresponds to joint adaptation between SD and PD, if a CSI-RS resource is associated with M sub-configurations among X sub-configurations included in the report, the network device determines the number of ports corresponding to the CSI-RS resource based on the following rules:
Solution 1: for joint adaptation between type 2 SD and PD, the number of occupied ports is equal to: M × P;
Solution 2: for joint adaptation between type 1 SD and PD, the number of occupied ports is:
   Solution 2-1: $max \left({\sum }_{s = 1}^{M} {P}_{s} , P\right)$, or ${\sum }_{s = 1}^{M} {P}_{s}$, or ${\sum }_{s = 1}^{L} {P}_{s}$;
   Solution 2-2: M × P;
   Here, the quantity of antenna ports corresponding to the M sub-configurations is configured to be equal to P;
   If the number of ports Ps of the SD corresponding to the CSI-RS is less than P, the network device does not configure the CSI-RS resource with a plurality of PD patterns under the SD;
   If Pc is less than P, the network device configures the CSI-RS resource to correspond to one PD pattern under the SD pattern corresponding to the value Pc, where Pc is the quantity of antenna ports corresponding to pattern c among different SD patterns.

Solution 2-3: M × P, the network device does not configure joint adaptation between type 1 SD and PD;
Here, P is the number of ports configured for the CSI-RS resource based on nrofPorts, Ps is the number of ports associated with sub-configuration s, and the CSI-RS resource is associated with sub-config s;
X is defined based on the following manners:
For a P CSI-RS resource, X = L, which is the number of configured sub-configurations;
For an SP CSI-RS resource, X = L, which is the number of configured sub-configurations, or X = N, which is the number of sub-configurations in an active state;
For an AP CSI-RS resource, X = N, which is the number of sub-configurations in an active state;
Alternatively, X can also be defined based on the following manners:
   For a P CSI report, X = L, which is the number of configured sub-configurations;
   For an SP CSI report, X = L, which is the number of configured sub-configurations, or X = N, which is the number of sub-configurations in an active state;
   For an AP CSI report, X = N, which is the number of sub-configurations in an active state.

The specific implementation of the present disclosure is described below from the terminal perspective:
Embodiment 1: Assume that the terminal is a Rel-18 and later version terminal, and the terminal is a terminal supporting the NES feature. To support measurement reporting of multiple SD and/or multiple power modes, NES supports defining multiple sub-CSI reports for the same CSI report config with multiple sub-configurations. Compared with the existing mechanism where one CSI report config corresponds to one CSI, Rel-18 NES has one CSI report config corresponding to multiple sub-configurations, and each sub-configuration corresponds to a sub-CSI report, which can effectively improve dynamic CSI measurement reporting performance.

The solution of the present disclosure mainly considers the scenario of joint adaptation between SD and PD corresponding to a CSI report, and designs corresponding rules to determine the port counting rule corresponding to the CSI-RS resource.

Under the condition that L sub-configurations are configured in a CSI report, among X sub-configurations thereof, for a specific CSI-RS resource, if the CSI-RS resource is associated with M sub-configurations, and the M sub-configurations belong to the X sub-configurations, then the quantity of antenna ports corresponding to the CSI-RS resource is associated with M. The specific rules are as follows.

A possible implementation: X is associated with sub-configurations configured or activated in the CSI report, and the specific definition is as follows:
For a P CSI-RS resource, X = L, which is the number of sub-configurations configured in the CSI report;
For an SP CSI-RS resource, X = L, which is the number of configured sub-configurations, or X = N, which is the number of sub-configurations in an active state;
For an AP CSI-RS resource, X = N, which is the number of sub-configurations in an active state;
A possible implementation: X is associated with sub-configurations configured or activated in the CSI report, and the specific definition is as follows:
   If the CSI report is a periodic CSI report, X = L, which is the number of sub-configurations configured in the CSI report;
   If the CSI report is a semi-persistent CSI report, X = L, which is the number of sub-configurations configured in the CSI report, or X = N, which is the number of sub-configurations in an active state;
   For an AP CSI report, X = N, which is the number of sub-configurations in an active state;
   P is defined as the default number of antenna ports. For example, P is configured based on nrofPorts corresponding to the CSI-RS resource, or P is the maximum number of antenna ports corresponding to the CSI-RS resource. Define Ps as the number of antenna ports corresponding to sub-configuration s, where the CSI-RS resource is associated with sub-configuration s, and Ps ≤ P.

Implementation 1: For the joint manner of type 2 SD and PD, if a CSI-RS resource is associated with M sub-configurations among X sub-configurations included in the report, the number of ports associated with the resource is equal to: M × P, where P is the default number of antenna ports. For example, as shown in FIG. 2C, if the configured number of antenna ports for CSI-RS1 is P=8, then the number of ports for CMR #1 corresponding to the CSI-RS report is equal to: 8 × 3 = 24.

Implementation 2: For the joint manner of type 1 SD and PD, if a CSI-RS resource is associated with M sub-configurations among X sub-configurations included in the report, the number of ports associated with the resource is equal to:
Implementation 2-1: $max \left({\sum }_{s = 1}^{M} {P}_{s} , P\right)$, where P and Ps are determined based on the above definitions. For example, as shown in FIG. 2B, the number of antenna ports corresponding to resource #1 for the CSI-RS report is equal to: 32×3+16×3=144.
Implementation 2-2: If the number of ports Ps corresponding to sub-configuration #s associated with the CSI-RS resource is not equal to P, the terminal does not expect sub-configuration s to be configured with a power offset, and/or the terminal does not expect that there exists sub-configuration m (m ≠ s) that corresponds to the same type 1 SD pattern as sub-configuration s (e.g., the corresponding number of ports Ps) and corresponds to a different power offset. For example, if a sub-configuration is not configured with a corresponding power offset, the terminal can interpret it as power offset = 0; based on the above restriction, different PDs corresponding to different power offsets can only be associated with sub-configurations whose port number is P. In this scenario, the corresponding number of ports is equal to: M × P.

For example, as shown in FIG. 2D, if P corresponding to CMR #1 is 32, then the number of ports corresponding to resource #1 for the CSI report is equal to: 32 × 3 = 96.

Implementation 2-3: To avoid computational complexity and reduce the processing complexity of the terminal, the terminal does not allow joint adaptation between type 1 SD and PD. That is, the terminal does not expect that a CSI report is configured with joint adaptation between type 1 SD and PD.

The embodiments of the present disclosure mainly design rules to determine the corresponding port counting rule in the scenario of joint adaptation between SD and PD. This facilitates consistent understanding between the network device and the terminal.

Embodiments of the present disclosure also propose an apparatus for implementing any of the above methods. For example, an apparatus is proposed, which includes units or modules for executing the steps performed by the terminal in any of the above methods. For another example, another apparatus is proposed, which includes units or modules for executing the steps performed by the network device (e.g., access network device, core network device, etc.) in any of the above methods.

It should be understood that the division of units or modules in the above apparatus is only a logical function division, and in actual implementation, they may be fully or partially integrated into one physical entity, or may be physically separated. In addition, the units or modules in the apparatus may be implemented in the form of a processor calling software: for example, the apparatus includes a processor, the processor is connected to a memory, and instructions are stored in the memory. The processor calls the instructions stored in the memory to implement any of the above methods or to implement the functions of the units or modules of the above apparatus. The processor is, for example, a general-purpose processor, such as a central processing unit (CPU) or a microprocessor, and the memory is a memory within the apparatus or a memory outside the apparatus. Alternatively, the units or modules in the apparatus may be implemented in the form of hardware circuits. The functions of some or all units or modules may be implemented by designing hardware circuits. The hardware circuits may be understood as one or more processors. For example, in one implementation, the hardware circuit is an application-specific integrated circuit (ASIC), and the functions of some or all units or modules are implemented by designing the logical relationship of circuit elements. For another example, in another implementation, the hardware circuit may be implemented by a programmable logic device (PLD). Taking a field programmable gate array (FPGA) as an example, it may include a large number of logic gate circuits, and the connection relationship between the logic gate circuits is configured by a configuration file, thereby implementing the functions of some or all units or modules. All units or modules of the above apparatus may be implemented by the processor calling software, or all by hardware circuits, or partially by the processor calling software and the remaining by hardware circuits.

In the embodiments of the present disclosure, a processor is a circuit with signal processing capability. In one implementation, the processor may be a circuit with instruction reading and running capabilities, such as a central processing unit (CPU), a microprocessor, a graphics processing unit (GPU) (which can be understood as a microprocessor), or a digital signal processor (DSP). In another implementation, the processor may implement certain functions through the logical relationship of a hardware circuit. The logical relationship of the hardware circuit may be fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading a configuration file to configure the hardware circuit can be understood as the process of the processor loading instructions to implement the functions of some or all units or modules. In addition, it may also be a hardware circuit designed for artificial intelligence, which can be understood as an ASIC, such as a neural network processing unit (NPU), a tensor processing unit (TPU), a deep learning processing unit (DPU), etc.

FIG. 4A is a structural diagram of a terminal according to an embodiment of the present disclosure. As shown in FIG. 4A, a terminal 4100 may include: a processing module 4101.

In some embodiments, the processing module 4101 is configured to determine the quantity of antenna ports, where the quantity of antenna ports is the quantity of antenna ports corresponding to a channel state information reference signal (CSI-RS) resource in a channel state information (CSI) report configuration; where the CSI report configuration includes a plurality of sub-configurations, and the CSI-RS resource is associated with M sub-configurations among X sub-configurations included in the CSI report configuration; where X and M are positive integers, and M is less than or equal to X.

Optionally, the processing module 4101 is configured to perform at least one of other steps (e.g., step S2105, step S2106, but not limited thereto) performed by the terminal 101 in any of the above methods, which will not be repeated here.

In some embodiments, the terminal 4100 further includes a transceiver module 4102 (not shown in FIG. 4A).

Optionally, the transceiver module 4102 is configured to perform at least one of communication steps such as sending and/or receiving (e.g., step S2100, step S2104, but not limited thereto) performed by the terminal 101 in any of the above methods, which will not be repeated here.

FIG. 4B is a structural diagram of a network device according to an embodiment of the present disclosure. As shown in FIG. 4B, a network device 4200 may include: a processing module 4201.

In some embodiments, the processing module 4201 is configured to determine the quantity of antenna ports, where the quantity of antenna ports is the quantity of antenna ports corresponding to a channel state information reference signal (CSI-RS) resource in a channel state information (CSI) report configuration; where the CSI report configuration includes a plurality of sub-configurations, and the CSI-RS resource is associated with M sub-configurations among X sub-configurations included in the CSI report configuration; where X and M are positive integers, and M is less than or equal to X.

Optionally, the processing module 4201 is configured to perform at least one of other steps (e.g., step S2101, step S2102, step S2103, but not limited thereto) performed by the network device 4200 in any of the above methods, which will not be repeated here.

Optionally, the network device 4200 may further include a transceiver module 4202 (not shown in FIG. 4B), and the transceiver module 4202 is configured to perform at least one of communication steps such as sending and/or receiving (e.g., step S2100, step S2104, but not limited thereto) performed by the network device 4200 in any of the above methods, which will not be repeated here.

In some embodiments, the processing module may be one module or may include a plurality of sub-modules. Optionally, the plurality of sub-modules respectively perform all or part of the steps required to be performed by the processing module. Optionally, the processing module can be interchanged with a processor.

In some embodiments, the transceiver module may include a sending module and/or a receiving module, and the sending module and the receiving module may be separate or integrated together. Optionally, the transceiver module can be interchanged with a transceiver.

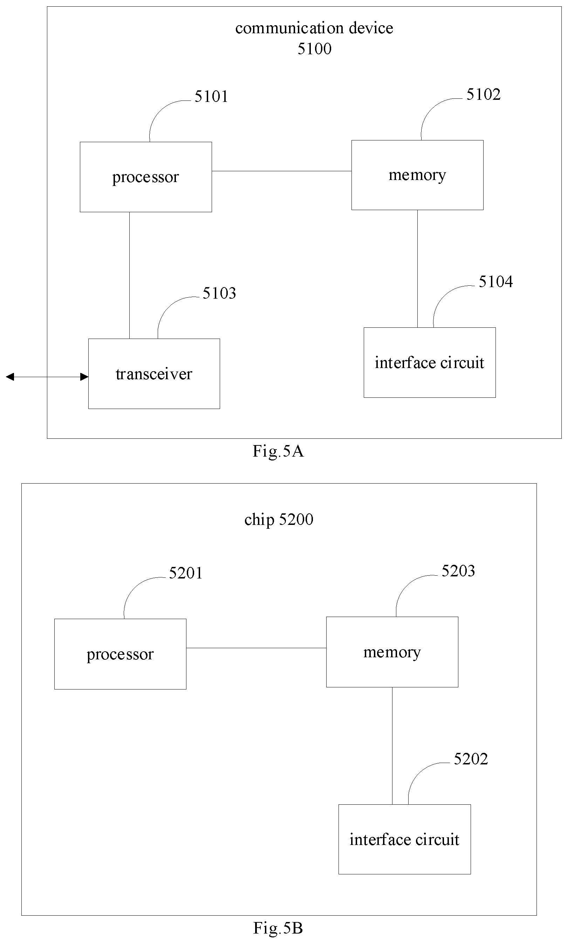

FIG. 5A is a structural diagram of a communication device 5100 according to an embodiment of the present disclosure. The communication device 5100 may be a network device (e.g., access network device, core network device, etc.), or a terminal (e.g., user equipment, etc.), or a chip, chip system, or processor that supports the network device to implement any of the above methods, or a chip, chip system, or processor that supports the terminal to implement any of the above methods. The communication device 5100 can be used to implement the methods described in the above method embodiments. For details, reference may be made to the descriptions in the above method embodiments.

As shown in FIG. 5A, the communication device 5100 includes one or more processors 5101. The processor 5101 may be a general-purpose processor or a special-purpose processor, for example, may be a baseband processor or a central processing unit. The baseband processor can be used to process communication protocols and communication data, and the central processing unit can be used to control a communication device (e.g., a base station, a baseband chip, a terminal device, a terminal device chip, a DU or a CU, etc.), execute programs, and process data of programs. Optionally, the communication device 5100 is configured to perform any of the above methods. Optionally, the one or more processors 5101 are configured to invoke instructions to cause the communication device 5100 to perform any of the above methods.

In some embodiments, the communication device 5100 further includes one or more transceivers 5102. When the communication device 5100 includes one or more transceivers 5102, the transceiver 5102 performs at least one of communication steps such as sending and/or receiving (e.g., step S2100, step S2104, but not limited thereto) in the above methods, and the processor 5101 performs at least one of other steps (e.g., step S2101, step S2102, step S2103, step S2105, step S2106, but not limited thereto). In an optional embodiment, the transceiver may include a receiver and/or a transmitter, and the receiver and the transmitter may be separate or integrated together. Optionally, terms such as transceiver, transceiver unit, transceiver machine, transceiver circuit, interface circuit, interface can be interchanged, terms such as transmitter, sending unit, transmitter machine, sending circuit can be interchanged, and terms such as receiver, receiving unit, receiver machine, receiving circuit can be interchanged.

In some embodiments, the communication device 5100 further includes one or more memories 5103 for storing data. Optionally, all or part of the memory 5103 may also be outside the communication device 5100. In an optional embodiment, the communication device 5100 may include one or more interface circuits 5104. Optionally, the interface circuit 5104 is connected to the memory 5102, and the interface circuit 5104 can be used to receive data from the memory 5102 or other devices, and can be used to send data to the memory 5102 or other devices. For example, the interface circuit 5104 can read data stored in the memory 5102 and send the data to the processor 5101.

The communication device 5100 described in the above embodiments may be a network device or a terminal, but the scope of the communication device 5100 described in the present disclosure is not limited thereto, and the structure of the communication device 5100 may not be limited by FIG. 5A. The communication device may be an independent device or may be part of a larger device. For example, the communication device may be: (1) an independent integrated circuit IC, or a chip, or a chip system or subsystem; (2) a set of one or more ICs, optionally, the set of ICs may also include a storage component for storing data and programs; (3) an ASIC, such as a modem (Modem); (4) a module that can be embedded in other devices; (5) a receiver, a terminal device, a smart terminal device, a cellular phone, a wireless device, a handset, a mobile unit, a vehicle-mounted device, a network device, a cloud device, an artificial intelligence device, etc.; (6) others, etc.

FIG. 5B is a structural diagram of a chip 5200 according to an embodiment of the present disclosure. For the case where the communication device 5100 may be a chip or a chip system, reference may be made to the structural diagram of the chip 5200 shown in FIG. 5B, but is not limited thereto.

The chip 5200 includes one or more processors 5201. The chip 5200 is configured to perform any of the above methods.

In some embodiments, the chip 5200 further includes one or more interface circuits 5202. Optionally, terms such as interface circuit, interface, transceiver pin can be interchanged. In some embodiments, the chip 5200 further includes one or more memories 5203 for storing data. Optionally, all or part of the memory 5203 may be outside the chip 5200. Optionally, the interface circuit 5202 is connected to the memory 5203, and the interface circuit 5202 can be used to receive data from the memory 5203 or other devices, and the interface circuit 5202 can be used to send data to the memory 5203 or other devices. For example, the interface circuit 5202 can read data stored in the memory 5203 and send the data to the processor 5201.

In some embodiments, the interface circuit 5202 performs at least one of communication steps such as sending and/or receiving (e.g., step S2100, step S2104, but not limited thereto) in the above methods. The interface circuit 5202 performing communication steps such as sending and/or receiving in the above methods means, for example, that the interface circuit 5202 performs data interaction between the processor 5201, the chip 5200, the memory 5203, or a transceiver device. In some embodiments, the processor 5201 performs at least one of other steps (step S2101, step S2102, step S2103, step S2105, step S2106, but not limited thereto).

The modules and/or devices described in the various embodiments of the virtual apparatus, physical apparatus, chip, etc., may be arbitrarily combined or separated according to circumstances. Optionally, some or all steps may also be performed by cooperation of multiple modules and/or devices, which is not limited here.

The present disclosure also proposes a storage medium, where the storage medium stores instructions, and when the instructions are executed on the communication device 5100, the communication device 5100 is caused to perform any of the above methods. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The present disclosure also proposes a program product, which, when executed by the communication device 5100, causes the communication device 5100 to perform any of the above methods. Optionally, the program product is a computer program product.

The present disclosure also proposes a computer program which, when run on a computer, causes the computer to perform any of the above methods.

It should be understood that the present disclosure is not limited to the precise structures described above and illustrated in the accompanying drawings, and various modifications and changes may be made without departing from the scope thereof. The scope of the present disclosure is limited only by the appended claims.

## Claims

1. A method for determining a port quantity, comprising:
determining the quantity of antenna ports, wherein the quantity of antenna ports is the quantity of antenna ports corresponding to a channel state information reference signal (CSI-RS) resource in a channel state information (CSI) report configuration, the CSI report configuration comprises a plurality of sub-configurations, the CSI-RS resource is associated with M sub-configurations among X sub-configurations in the CSI report configuration, X and M are positive integers, and M is less than or equal to X.

2. The method according to claim 1, wherein the CSI report configuration corresponds to a joint adaptation between a spatial domain (SD) and a power domain (PD).

3. The method according to claim 1 or 2, wherein determining the quantity of antenna ports comprises:
determining that the quantity of antenna ports is equal to a first value, wherein the CSI report configuration corresponds to a joint adaptation between a first type of SD and a PD, and a CSI-RS resource corresponding to the first type of SD corresponds to a plurality of SD patterns.

4. The method according to claim 3, wherein the first value is one of:
a maximum between a value P and a sum of M values Ps, wherein the value Ps is the quantity of antenna ports corresponding to a sub-configuration s among the M sub-configurations, and the value P is a default quantity of antenna ports corresponding to the CSI-RS resource; or
a sum of M values Ps, wherein the value Ps is the quantity of antenna ports corresponding to a sub-configuration s among the M sub-configurations; or
a sum of L values Ps, wherein the value Ps is the quantity of antenna ports corresponding to a sub-configuration s among the M sub-configurations, and L is a total quantity of sub-configurations configured in the CSI report configuration.

5. The method according to claim 3 or 4, wherein the first value is one of:
$max \left({\sum }_{s = 1}^{M} {P}_{s} , P\right)$, wherein Ps is the quantity of antenna ports corresponding to a sub-configuration s among the M sub-configurations, and P is a default quantity of antenna ports corresponding to the CSI-RS resource; or
${\sum }_{s = 1}^{M} {P}_{s}$, wherein Ps is the quantity of antenna ports corresponding to a sub-configuration s among the M sub-configurations; or
${\sum }_{s = 1}^{L} {P}_{s}$, wherein Ps is the quantity of antenna ports corresponding to a sub-configuration s among L sub-configurations, and L is a total quantity of sub-configurations configured in the CSI report configuration.

6. The method according to claim 1 or 2, wherein determining the quantity of antenna ports comprises:
determining that the quantity of antenna ports is equal to a product of M and a value P, wherein the CSI report configuration corresponds to a joint adaptation between a first type of SD and a PD, a CSI-RS resource corresponding to the first type of SD corresponds to a plurality of SD patterns, and the value P is a default quantity of antenna ports corresponding to the CSI-RS resource.

7. The method according to any one of claims 1 to 2 or 6, further comprising at least one of:
determining that the quantity of antenna ports corresponding to the M sub-configurations is equal to a value P, wherein the CSI-RS resource corresponds to a joint adaptation between a first type of SD and a PD, a CSI-RS resource corresponding to the first type of SD corresponds to a plurality of SD patterns, and the value P is a default quantity of antenna ports corresponding to the CSI-RS resource;
in a case where a value Ps is less than a value P, not expecting that the CSI-RS resource is configured with a PD pattern in a first type of SD pattern, wherein a CSI-RS resource corresponding to a first type of SD corresponds to a plurality of SD patterns, the value Ps is the quantity of antenna ports corresponding to a sub-configuration s among the M sub-configurations, and the value P is a default quantity of antenna ports corresponding to the CSI-RS resource; or
in a case where a value Pc is less than a value P, not expecting that the CSI-RS resource is configured with a plurality of PD patterns in an SD pattern corresponding to the value Pc, wherein the value Pc is the quantity of antenna ports corresponding to a pattern c among different SD patterns, and the value P is a default quantity of antenna ports corresponding to the CSI-RS resource.

8. The method according to any one of claims 1-2 or 6, further comprising:
not expecting that the CSI report configuration corresponds to a joint adaptation between a first type of SD and a PD, wherein a CSI-RS resource corresponding to the first type of SD corresponds to a plurality of SD patterns.

9. The method according to claim 1 or 2, wherein determining the quantity of antenna ports comprises:
determining that the quantity of antenna ports is equal to a product of M and a value P, wherein the CSI report configuration corresponds to a joint adaptation between a second type of SD and a PD, a CSI-RS resource corresponding to the second type of SD corresponds to one SD pattern, and the value P is a default quantity of antenna ports corresponding to the CSI-RS resource.

10. The method according to any one of claims 1 to 9, further comprising at least one of:
determining X based on a type of the CSI-RS resource; or
determining X based on a type of a CSI report.

11. The method according to claim 10, wherein determining X based on the type of the CSI-RS resource comprises one of:
in a case where the CSI-RS resource is a periodic (P) resource, determining that X is equal to a total quantity of the sub-configurations configured in the CSI report configuration; or
in a case where the CSI-RS resource is a semi-persistent (SP) resource, determining that X is equal to a total quantity of the sub-configurations configured in the CSI report configuration, or determining that X is equal to the quantity of sub-configurations in an active state in the CSI report configuration; or
in a case where the CSI-RS resource is an aperiodic (AP) resource, determining that X is equal to the quantity of sub-configurations in an active state in the CSI report configuration.

12. The method according to claim 10, wherein determining X based on the type of the CSI report comprises one of:
in a case where the CSI report is a P CSI report, determining that X is equal to a total quantity of the sub-configurations configured in the CSI report configuration; or
in a case where the CSI report is an SP CSI report, determining that X is equal to a total quantity of the sub-configurations configured in the CSI report configuration, or determining that X is equal to the quantity of sub-configurations in an active state in the CSI report configuration; or
in a case where the CSI report is an AP CSI report, determining that X is equal to the quantity of sub-configurations in an active state in the CSI report configuration.

13. The method according to any one of claims 1 to 12, wherein X is associated with sub-configurations configured or activated in the CSI report configuration.

14. A method for determining a port quantity, comprising:
determining the quantity of antenna ports, wherein the quantity of antenna ports is the quantity of antenna ports corresponding to a channel state information reference signal (CSI-RS) resource in a channel state information (CSI) report configuration, the CSI report configuration comprises a plurality of sub-configurations, the CSI-RS resource is associated with M sub-configurations among X sub-configurations in the CSI report configuration, X and M are positive integers, and M is less than or equal to X.

15. The method according to claim 14, wherein the CSI report configuration corresponds to a joint adaptation between a spatial domain (SD) and a power domain (PD).

16. The method according to claim 14 or 15, wherein determining the quantity of antenna ports comprises:
determining that the quantity of antenna ports is equal to a first value, wherein the CSI report configuration corresponds to a joint adaptation between a first type of SD and a PD, and a CSI-RS resource corresponding to the first type of SD corresponds to a plurality of SD patterns.

17. The method according to claim 16, wherein the first value is one of:
a maximum between a value P and a sum of M values Ps, wherein the value Ps is the quantity of antenna ports corresponding to a sub-configuration s among the M sub-configurations, and the value P is a default quantity of antenna ports corresponding to the CSI-RS resource; or
a sum of M values Ps, wherein the value Ps is the quantity of antenna ports corresponding to a sub-configuration s among the M sub-configurations; or
a sum of L values Ps, wherein the value Ps is the quantity of antenna ports corresponding to a sub-configuration s among the M sub-configurations, and L is a total quantity of sub-configurations configured in the CSI report configuration.

18. The method according to claim 16 or 17, wherein the first value is one of:
$max \left({\sum }_{s = 1}^{M} {P}_{s} , P\right)$, wherein Ps is the quantity of antenna ports corresponding to a sub-configuration s among the M sub-configurations, and P is a default quantity of antenna ports corresponding to the CSI-RS resource; or
${\sum }_{s = 1}^{M} {P}_{s}$, wherein Ps is the quantity of antenna ports corresponding to a sub-configuration s among the M sub-configurations; or
${\sum }_{s = 1}^{L} {P}_{s}$, wherein Ps is the quantity of antenna ports corresponding to a sub-configuration s among L sub-configurations, and L is a total quantity of sub-configurations configured in the CSI report configuration.

19. The method according to claim 14 or 15, wherein determining the quantity of antenna ports comprises:
determining that the quantity of antenna ports is equal to a product of M and a value P, wherein the CSI report configuration corresponds to a joint adaptation between a first type of SD and a PD, a CSI-RS resource corresponding to the first type of SD corresponds to a plurality of SD patterns, and the value P is a default quantity of antenna ports corresponding to the CSI-RS resource.

20. The method according to any one of claims 14 to 15 or 19, further comprising at least one of:
configuring the quantity of antenna ports corresponding to the M sub-configurations to be equal to a value P, wherein the CSI report configuration corresponds to a joint adaptation between a first type of SD and a PD, and a CSI-RS resource corresponding to the first type of SD corresponds to a plurality of SD patterns;
in a case where a value Ps is less than a value P, determining that the CSI-RS resource is not configured with a PD pattern in a first type of SD pattern, wherein a CSI-RS resource corresponding to a first type of SD corresponds to a plurality of SD patterns, the value Ps is the quantity of antenna ports corresponding to a sub-configuration s among the M sub-configurations, and the value P is a default quantity of antenna ports corresponding to the CSI-RS resource; or
in a case where a value Pc is less than a value P, determining that the CSI-RS resource is not configured with a plurality of PD patterns in an SD pattern corresponding to the value Pc, wherein the value Pc is the quantity of antenna ports corresponding to a pattern c among different SD patterns, and the value P is a default quantity of antenna ports corresponding to the CSI-RS resource.

21. The method according to any one of claims 14 to 15 or 19, further comprising:
determining not to configure the CSI report configuration to correspond to a joint adaptation between a first type of SD and a PD, wherein a CSI-RS resource corresponding to the first type of SD corresponds to a plurality of SD patterns.

22. The method according to claim 14 or 15, wherein determining the quantity of antenna ports comprises:
determining that the quantity of antenna ports is equal to a product of M and a value P, wherein the CSI report configuration corresponds to a joint adaptation between a second type of SD and a PD, a CSI-RS resource corresponding to the second type of SD corresponds to one SD pattern, and the value P is a default quantity of antenna ports corresponding to the CSI-RS resource.

23. The method according to any one of claims 14 to 22, further comprising at least one of:
determining X based on a type of the CSI-RS resource; or
determining X based on a type of a CSI report.

24. The method according to claim 23, wherein determining X based on the type of the CSI-RS resource comprises one of:
in a case where the CSI-RS resource is a periodic (P) resource, determining that X is equal to a total quantity of the sub-configurations configured in the CSI report configuration; or
in a case where the CSI-RS resource is a semi-persistent (SP) resource, determining that X is equal to a total quantity of the sub-configurations configured in the CSI report configuration, or determining that X is equal to the quantity of sub-configurations in an active state in the CSI report configuration; or
in a case where the CSI-RS resource is an aperiodic (AP) resource, determining that X is equal to the quantity of sub-configurations in an active state in the CSI report configuration.

25. The method according to claim 23, wherein determining X based on the type of the CSI report comprises one of:
in a case where the CSI report is a P CSI report, determining that X is equal to a total quantity of the sub-configurations configured in the CSI report configuration; or
in a case where the CSI report is an SP CSI report, determining that X is equal to a total quantity of the sub-configurations configured in the CSI report configuration, or determining that X is equal to the quantity of sub-configurations in an active state in the CSI report configuration; or
in a case where the CSI report is an AP CSI report, determining that X is equal to the quantity of sub-configurations in an active state in the CSI report configuration.

26. The method according to any one of claims 14 to 25, wherein X is associated with sub-configurations configured or activated in the CSI report configuration.

27. A terminal, comprising:
a processing module configured to determine the quantity of antenna ports, wherein the quantity of antenna ports is the quantity of antenna ports corresponding to a channel state information reference signal (CSI-RS) resource in a channel state information (CSI) report configuration, the CSI report configuration comprises a plurality of sub-configurations, the CSI-RS resource is associated with M sub-configurations among X sub-configurations in the CSI report configuration, X and M are positive integers, and M is less than or equal to X.

28. A network device, comprising:
a processing module configured to determine the quantity of antenna ports, wherein the quantity of antenna ports is the quantity of antenna ports corresponding to a channel state information reference signal (CSI-RS) resource in a channel state information (CSI) report configuration, the CSI report configuration comprises a plurality of sub-configurations, the CSI-RS resource is associated with M sub-configurations among X sub-configurations in the CSI report configuration, X and M are positive integers, and M is less than or equal to X.

29. A terminal, comprising one or more processors;
wherein the terminal is configured to perform the method for determining a port quantity according to any one of claims 1 to 13.

30. A network device, comprising one or more processors;
wherein the network device is configured to perform the method for determining a port quantity according to any one of claims 14 to 26.

31. A communication system, comprising a terminal and a network device, wherein the terminal is configured to perform the method for determining a port quantity according to any one of claims 1 to 13, and the network device is configured to perform the method for determining a port quantity according to any one of claims 14 to 26.

32. A storage medium, having store therein instructions that, when executed by a communication device, cause the communication device to perform the method for determining a port quantity according to any one of claims 1 to 13 or any one of claims 14 to 26.
